# EUROPEAN PATENT APPLICATION

(11) **EP 4 749 446 A1**
(43) Date of publication of application: **27.05.2026**
(21) Application number: 24918174.4
(22) Date of filing: 05.11.2024
(51) Int. Cl.: G06F 9/451

(54) **NOTIFICATION DISPLAY METHOD AND ELECTRONIC DEVICE**

(30) Priority: 17.01.2024 CN 202410071718
(71) Applicant: HUAWEI TECHNOLOGIES CO., LTD., Shenzhen 518129 (CN)
(72) Inventor: HUANG, Jing, Shenzhen, Guangdong 518129 (CN); YAO, Liying, Shenzhen, Guangdong 518129 (CN); DING, Chenpeng, Shenzhen, Guangdong 518129 (CN); LIN, Shuxiao, Shenzhen, Guangdong 518129 (CN)
(74) Representative: Goddar, Heinz J.
(86) International application number: PCT/CN2024/129931
(87) International publication number: WO 2025/152565

(57) **Abstract**

This application provides a notification display method and an electronic device, and relates to the field of terminal technologies. In this application, the electronic device displays corresponding detailed information based on an operation of a user on indication information of a notification in indication information of a plurality of notifications displayed in a status bar, to help the user flexibly view notification content. The method includes: The electronic device displays a first interface including the status bar on a top; displays, in the status bar, indication information of at least two notifications that includes indication information of a first notification and indication information of a second notification, where the indication information of the first notification and the indication information of the second notification are displayed independently of each other; in response to a first operation of the user on the indication information of the first notification, displays detailed information of the first notification on the first interface in a floating form; and in response to a second operation of the user on the indication information of the second notification, displays detailed information of the second notification on the first interface in the floating form, and resumes display of the indication information of the first notification in the status bar.

## Description

This application claims priority to Chinese Patent Application No. 202410071718.3, filed with the China National Intellectual Property Administration on January 17, 2024 and entitled "NOTIFICATION DISPLAY METHOD AND ELECTRONIC DEVICE", which is incorporated herein by reference in its entirety.

### TECHNICAL FIELD

This application relates to the field of terminal technologies, and in particular, to a notification display method and an electronic device.

### BACKGROUND

With development of terminal technologies, more applications are installed on an electronic device (for example, a mobile phone or a tablet computer). The application may generate various types of notifications to indicate related content of the application. For example, a takeout application may generate a plurality of notifications with a change of an order progress after a user places an order. The electronic device may display these notifications to help the user learn of the order progress.

However, because there are a large quantity of notifications, it is difficult for the user to promptly notice some high-timeliness notifications. If the user does not notice the notifications until the notifications are displayed for a period of time, the notifications become invalid information, and the notifications are stacked in a notification center to interfere with the user in obtaining other valid notifications.

### SUMMARY

To resolve the foregoing technical problems, this application provides a notification display method and an electronic device. According to the technical solutions provided in this application, in a process of displaying indication information of a plurality of notifications in a status bar, the electronic device can display detailed information of a notification based on an operation of a user on indication information of the notification, so that the notification can be quickly presented to the user, and the user can flexibly view the detailed information of the notification.

To achieve the foregoing technical objective, this application provides the following technical solutions.

According to a first aspect, a notification display method is provided, and is applied to an electronic device. The method includes: displaying a first interface, where the first interface includes a status bar on a top; displaying indication information of at least two notifications in the status bar, where the indication information of the at least two notifications includes indication information of a first notification and indication information of a second notification, and the indication information of the first notification and the indication information of the second notification are displayed independently of each other; in response to a first operation of a user on the indication information of the first notification, displaying detailed information of the first notification on the first interface in a floating form; and in response to a second operation of the user on the indication information of the second notification, displaying detailed information of the second notification on the first interface in the floating form, and resuming display of the indication information of the first notification in the status bar.

In this way, the electronic device can present, in the status bar, indication information of a plurality of independently displayed notifications, to present the notifications to the user in a timely manner.

In addition, the electronic device may unfold and display detailed information of a notification based on an operation of the user on indication information of the notification, to meet a requirement of the user for flexibly viewing the detailed information of the notification.

In addition, in response to an operation of the user on indication information of another notification, the electronic device may determine that the user has finished viewing or is no longer interested in the notification currently displaying detailed information. In this way, the electronic device can further automatically resume the display of the indication information of the notification, thereby simplifying a user operation.

According to the first aspect, the method further includes: obtaining a third notification; and in response to remaining display space in the status bar not meeting a display requirement of indication information of the third notification, displaying the indication information of the at least two notifications and a folding control in a folded form. The folding control indicates the folded third notification, and the folded form includes that the indication information of the first notification, the indication information of the second notification, and the folding control are displayed independently of each other.

For example, in a process in which the electronic device displays indication information of a call notification and indication information of a ride hailing notification in the status bar in a tiled manner, the electronic device receives a takeout notification, and determines that indication information of the takeout notification needs to be displayed. In addition, the electronic device determines that the remaining display space in the status bar is not enough to display the indication information of the takeout notification. In this way, the electronic device displays the indication information of the call notification and the indication information of the ride hailing notification in a folded manner, and displays a folding control. The folding control indicates the folded indication information of the takeout notification.

In this way, when the display space in the status bar is not enough, the electronic device may display indication information of a plurality of notifications in the folded manner, to meet a notification display requirement and facilitate viewing of the notifications by the user.

According to any one of the first aspect or the implementations of the first aspect, the method further includes: detecting a third operation of the user on the folding control; and displaying, on the first interface in the floating form, detailed information of the folded third notification; or displaying, on the first interface in the floating form, the detailed information of the first notification, the detailed information of the second notification, and detailed information of the third notification.

In this way, the user can indicate, based on a requirement by tapping the indication information of the notification, the electronic device to display the detailed information of the folded notification, thereby avoiding a problem that the user cannot obtain notification content because the indication information of the notification is folded.

According to any one of the first aspect or the implementations of the first aspect, the method further includes: obtaining a fourth notification, where a priority of the fourth notification is lower than a priority of the first notification and a priority of the second notification; and displaying the indication information of the at least two notifications and a folding control in the folded form, where the folding control indicates the folded third notification and the folded fourth notification.

In this way, in a process of displaying the indication information of the notification in the folded manner, after a new notification is received, indication information corresponding to the new notification is still displayed in the folded form. In addition, the electronic device determines, based on a priority status of to-be-displayed indication information of a notification, whether to display the indication information of the notification in an unfolded manner or a folded manner.

According to any one of the first aspect or the implementations of the first aspect, in response to the first operation of the user on the indication information of the first notification, after the displaying the detailed information of the first notification on the first interface in the floating form, the method further includes: when the remaining display space in the status bar meets the display requirement of the indication information of the folded third notification, displaying the indication information of the third notification in the status bar. A priority of the third notification is higher than the priority of the fourth notification.

**In** this way, based on priorities of the notifications and the remaining display space in the status bar, the electronic device performs adjustment adaptively to display the indication information of the notifications in the unfolded or folded manner and adaptively adjusts a display sequence of the indication information of the notifications. In this way, when a live notification is timely presented to the user, a live notification with a higher priority is preferentially presented to the user.

According to any one of the first aspect or the implementations of the first aspect, in response to the first operation of the user on the indication information of the first notification, after the displaying the detailed information of the first notification on the first interface in the floating form, the method further includes: when the remaining display space in the status bar meets the display requirement of the indication information of the folded third notification, displaying the indication information of the third notification in the status bar, and no longer displaying the folding control in the status bar.

For example, when there is one segment of indication information of the folded notification, in response to an operation of the user on the folding control, the electronic device no longer displays the folding control after displaying a card corresponding to the folded notification.

In this way, based on a display status of the indication information of the notification and a status of the remaining space in the status bar, the electronic device can perform adjustment adaptively about whether to display the indication information of the notification in the folded manner to flexibly present the indication information of the notification to the user.

According to any one of the first aspect or the implementations of the first aspect, the priority of the first notification is higher than the priority of the second notification, and in response to the first operation of the user on the indication information of the first notification, after the displaying the detailed information of the first notification on the first interface in the floating form, the method further includes: moving the indication information of the second notification in the status bar to an original display location of the indication information of the first notification for display.

For example, the electronic device displays the indication information of the call notification and the indication information of the ride hailing notification in the tiled manner, and a priority of the call notification is higher than a priority of the ride hailing notification. In response to a tap operation of the user on the indication information of the call notification, the electronic device unfolds, for display, a call card corresponding to the indication information of the call notification, and prioritizes the indication information of the ride hailing notification to a location with a higher display priority for display.

In this way, in response to the operation of the user on the indication information of the notification, the electronic device can present more information of the notification to the user, and can adaptively adjust display locations of indication information of different notifications, to achieve better display effect.

According to any one of the first aspect or the implementations of the first aspect, the indication information of the second notification displayed in the status bar includes one segment of text information, the second notification corresponds to a plurality of segments of text information, and in response to the first operation of the user on the indication information of the first notification, after the displaying the detailed information of the first notification on the first interface in the floating form, the method further includes: when the remaining display space in the status bar meets display of the plurality of segments of text information of the second notification, displaying, in the status bar, the indication information of the second notification that includes the plurality of segments of text information.

For example, the electronic device displays the indication information of the call notification and the indication information of the ride hailing notification in the tiled manner. In response to the tap operation of the user on the indication information of the call notification, the electronic device unfolds, for display, the call card corresponding to the indication information of the call notification, prioritizes the indication information of the ride hailing notification that is displayed in the normal tiled manner to a location with a higher display priority, and displays the indication information of the ride hailing notification in a tiled and extended display manner.

In this way, in response to the operation of the user on the indication information of the notification, the electronic device can present more information of the live notification to the user, and can adaptively adjust display locations and display manners of indication information of different notifications, to achieve better display effect.

According to any one of the first aspect or the implementations of the first aspect, the indication information of the first notification includes one or more segments of text information corresponding to the first notification, and the indication information of the second notification includes one or more segments of text information corresponding to the second notification.

In some examples, formats of content displayed in a notification, for example, a color, an icon, and an information amount, are preconfigured on a server side. The information amount indicates how many segments of indication information are included in the live notification.

According to any one of the first aspect or the implementations of the first aspect, the method further includes: obtaining a fifth notification; and in response to remaining display space in the status bar not meeting a display requirement of indication information of the fifth notification, displaying the indication information of the at least two notifications and the indication information of the fifth notification in a stacked form. A priority of the fifth notification is lower than priorities of the at least two notifications, and the stacked form includes that the indication information of the at least two notifications partially covers the indication information of the fifth notification.

In this way, the electronic device may choose to use a folded form or the stacked form to flexibly display indication information of more notifications.

According to any one of the first aspect or the implementations of the first aspect, the method further includes: in response to an operation of the user on a display area of the indication information of the at least two notifications and the indication information of the fifth notification, displaying, on the first interface in the floating form, the detailed information of the first notification, the detailed information of the second notification, and detailed information of the fifth notification.

In this way, when the electronic device displays indication information of a plurality of notifications in the stacked form, in response to the user operation, the electronic device may alternatively present detailed information of the notifications to the user, so that the user can better learn of notification content.

According to any one of the first aspect or the implementations of the first aspect, both the indication information of the first notification and the indication information of the second notification are in capsule forms.

According to any one of the first aspect or the implementations of the first aspect, the detailed information is carried in a card form.

According to any one of the first aspect or the implementations of the first aspect, the indication information indicates an application that sends the first notification or the second notification, and also indicates content of the first notification or content of the second notification.

For example, the indication information includes information such as an icon of the application that sends the first notification or the second notification, partial content of the first notification or partial content of the second notification, and a color (for example, a capsule color, a card color, or a text color) of the first notification or the second notification.

In this way, after receiving the live notification, the electronic device can present, in a form of the indication information of the notification, the live notification to the user in the timely manner in the status bar.

According to a second aspect, an electronic device is provided. The electronic device includes a processor, a memory, and a display. The memory and the display are coupled to the processor. The memory is configured to store computer program code. The computer program code includes computer instructions. When the processor reads the computer instructions from the memory, the electronic device is enabled to perform the following operations: displaying a first interface, where the first interface includes a status bar on a top; displaying indication information of at least two notifications in the status bar, where the indication information of the at least two notifications includes indication information of a first notification and indication information of a second notification, and the indication information of the first notification and the indication information of the second notification are displayed independently of each other; in response to a first operation of a user on the indication information of the first notification, displaying detailed information of the first notification on the first interface in a floating form; and in response to a second operation of the user on the indication information of the second notification, displaying detailed information of the second notification on the first interface in the floating form, and resuming display of the indication information of the first notification in the status bar.

According to the second aspect, when the processor reads the computer instructions from the memory, the electronic device is further enabled to perform the following operations: obtaining a third notification; and in response to remaining display space in the status bar not meeting a display requirement of indication information of the third notification, displaying the indication information of the at least two notifications and a folding control in a folded form. The folding control indicates the folded third notification, and the folded form includes that the indication information of the first notification, the indication information of the second notification, and the folding control are displayed independently of each other.

According to any one of the second aspect or the implementations of the second aspect, when the processor reads the computer instructions from the memory, the electronic device is further enabled to perform the following operations: detecting a third operation of the user on the folding control; and displaying, on the first interface in the floating form, detailed information of the folded third notification; or displaying, on the first interface in the floating form, the detailed information of the first notification, the detailed information of the second notification, and detailed information of the third notification.

According to any one of the second aspect or the implementations of the second aspect, when the processor reads the computer instructions from the memory, the electronic device is further enabled to perform the following operations: obtaining a fourth notification, where a priority of the fourth notification is lower than a priority of the first notification and a priority of the second notification; and displaying the indication information of the at least two notifications and a folding control in the folded form, where the folding control indicates the folded third notification and the folded fourth notification.

According to any one of the second aspect or the implementations of the second aspect, when the processor reads the computer instructions from the memory, the electronic device is further enabled to perform the following operation: when the remaining display space in the status bar meets the display requirement of the indication information of the folded third notification, displaying the indication information of the third notification in the status bar. A priority of the third notification is higher than the priority of the fourth notification.

According to any one of the second aspect or the implementations of the second aspect, when the processor reads the computer instructions from the memory, the electronic device is further enabled to perform the following operation: when the remaining display space in the status bar meets the display requirement of the indication information of the folded third notification, displaying the indication information of the third notification in the status bar, and no longer displaying the folding control in the status bar.

According to any one of the second aspect or the implementations of the second aspect, the priority of the first notification is higher than the priority of the second notification, and when the processor reads the computer instructions from the memory, the electronic device is further enabled to perform the following operation: moving the indication information of the second notification in the status bar to an original display location of the indication information of the first notification for display.

According to any one of the second aspect or the implementations of the second aspect, the indication information of the second notification displayed in the status bar includes one segment of text information, the second notification corresponds to a plurality of segments of text information, and when the processor reads the computer instructions from the memory, the electronic device is further enabled to perform the following operation: when the remaining display space in the status bar meets display of the plurality of segments of text information of the second notification, displaying, in the status bar, the indication information of the second notification that includes the plurality of segments of text information.

According to any one of the second aspect or the implementations of the second aspect, the indication information of the first notification includes one or more segments of text information corresponding to the first notification, and the indication information of the second notification includes one or more segments of text information corresponding to the second notification.

According to any one of the second aspect or the implementations of the second aspect, when the processor reads the computer instructions from the memory, the electronic device is further enabled to perform the following operation: obtaining a fifth notification; and in response to remaining display space in the status bar not meeting a display requirement of indication information of the fifth notification, displaying the indication information of the at least two notifications and the indication information of the fifth notification in a stacked form. A priority of the fifth notification is lower than priorities of the at least two notifications, and the stacked form includes that the indication information of the at least two notifications partially covers the indication information of the fifth notification.

According to any one of the second aspect or the implementations of the second aspect, when the processor reads the computer instructions from the memory, the electronic device is further enabled to perform the following operation: in response to an operation of the user on a display area of the indication information of the at least two notifications and the indication information of the fifth notification, displaying, on the first interface in the floating form, the detailed information of the first notification, the detailed information of the second notification, and detailed information of the fifth notification.

According to any one of the second aspect or the implementations of the second aspect, both the indication information of the first notification and the indication information of the second notification are in capsule forms.

According to any one of the second aspect or the implementations of the second aspect, the detailed information is carried in a card form.

According to any one of the second aspect or the implementations of the second aspect, the indication information indicates an application that sends the first notification or the second notification, and also indicates content of the first notification or content of the second notification.

According to a third aspect, an electronic device is provided. The electronic device has a function of implementing the notification display method according to any one of the first aspect and the implementations of the first aspect. The function may be implemented by hardware, or may be implemented by hardware executing corresponding software. The hardware or the software includes one or more modules corresponding to the function.

According to a fourth aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect.

According to a fifth aspect, a computer program product is provided. When the computer program product runs on an electronic device, the electronic device is enabled to perform the method according to any one of the first aspect or the implementations of the first aspect.

According to a sixth aspect, a circuit system is provided. The circuit system includes a processing circuit, and the processing circuit is configured to perform the method according to any one of the first aspect or the implementations of the first aspect.

According to a seventh aspect, a chip system is provided, including at least one processor and at least one interface circuit. The at least one interface circuit is configured to perform a transceiver function, and send instructions to the at least one processor. When the at least one processor executes the instructions, the at least one processor performs the method according to any one of the first aspect or the implementations of the first aspect.

For technical effect of the foregoing aspects, refer to each other. Details are not described herein again.

### BRIEF DESCRIPTION OF DRAWINGS

FIG. 1 is a diagram of a form of an electronic device according to an embodiment of this application;
FIG. 2 is a diagram of a hardware structure of an electronic device according to an embodiment of this application;
FIG. 3(a) to FIG. 3(e) are a diagram of notification display interfaces in different display scenarios according to an embodiment of this application;
FIG. 4(a) to FIG. 4(c) are a diagram of display space in a status bar according to an embodiment of this application;
FIG. 5 is a schematic flowchart 1 of a notification display method according to an embodiment of this application;
FIG. 6(a) to FIG. 6(c) are a diagram of interfaces for displaying capsules of different lengths according to an embodiment of this application;
FIG. 7 is a diagram 1 of a multi-capsule display interface according to an embodiment of this application;
FIG. 8A and FIG. 8B are a schematic flowchart 2 of a notification display method according to an embodiment of this application;
FIG. 9(a) and FIG. 9(b) are a diagram 2 of multi-capsule display interfaces according to an embodiment of this application;
FIG. 10(a) and FIG. 10(b) are a diagram 3 of multi-capsule display interfaces according to an embodiment of this application;
FIG. 11(a) and FIG. 11(b) are a diagram 4 of multi-capsule display interfaces according to an embodiment of this application;
FIG. 12(a) and FIG. 12(b) are a diagram 5 of multi-capsule display interfaces according to an embodiment of this application;
FIG. 13(a) to FIG. 13(c) are a diagram 6 of multi-capsule display interfaces according to an embodiment of this application;
FIG. 14A(a) and FIG. 14A(b) are a diagram 7 of multi-capsule display interfaces according to an embodiment of this application;
FIG. 14B(a) and FIG. 14B(b) are a diagram 8 of multi-capsule display interfaces according to an embodiment of this application;
FIG. 15 is a schematic flowchart 3 of a notification display method according to an embodiment of this application;
FIG. 16(a) to FIG. 16(c) are a diagram 1 of interfaces for displaying detailed content corresponding to tiled capsules according to an embodiment of this application;
FIG. 17(a) and FIG. 17(b) are a diagram 2 of interfaces for displaying detailed content corresponding to tiled capsules according to an embodiment of this application;
FIG. 18(a) and FIG. 18(b) are a diagram 3 of interfaces for displaying detailed content corresponding to tiled capsules according to an embodiment of this application;
FIG. 19 is a schematic flowchart 4 of a notification display method according to an embodiment of this application;
FIG. 20(a) to FIG. 20(d) are a diagram of interfaces of capsule stacked display according to an embodiment of this application;
FIG. 21(a) to FIG. 21(d) are a diagram of interfaces of capsule folded display according to an embodiment of this application;
FIG. 22 is a schematic flowchart 5 of a notification display method according to an embodiment of this application;
FIG. 23(a) and FIG. 23(b) are a diagram of interfaces for displaying detailed content corresponding to stacked capsules according to an embodiment of this application;
FIG. 24(a) and FIG. 24(b) are a diagram 1 of interfaces for displaying detailed content corresponding to folded capsules according to an embodiment of this application;
FIG. 25(a) and FIG. 25(b) are a diagram 2 of interfaces for displaying detailed content corresponding to folded capsules according to an embodiment of this application;
FIG. 26(a) to FIG. 26(c) are a diagram 3 of interfaces for displaying detailed content corresponding to folded capsules according to an embodiment of this application;
FIG. 27 is a schematic flowchart 6 of a notification display method according to an embodiment of this application; and
FIG. 28 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The singular expression "one", "a/an", "said", "the foregoing", "the", and "this" as used in this specification and the appended claims of this application are intended to include expressions like "one or more", unless otherwise specified in the context clearly. It should be further understood that, in the following embodiments of this application, "at least one" and "one or more" mean one or more (including two).

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments", that appear at different places in this specification do not necessarily mean referring to a same embodiment, instead, they mean "one or more but not all of embodiments", unless otherwise specifically emphasized. The terms "include", "contain", "have", and other variants thereof all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design solution described by using "example" or "for example" in embodiments of this application should not be explained as being more preferred or having more advantages than another embodiment or design solution. Exactly, the word "example", "for example", or the like is used to present a related concept in a specific manner.

In some embodiments, an electronic device (such as a mobile phone or a tablet computer) may display, in a plurality of manners, notifications generated by a service side. The service for generating the notifications is, for example, an application, a meta service, or an applet. For example, the electronic device prompts, in a plurality of manners such as a banner notification, a lock screen notification, and a desktop corner icon, a user with the notifications generated by the application, and the user may view these notifications.

Optionally, according to timeliness, the notifications may include a live notification and a non-live notification. The live notification indicates a notification that has a high timeliness requirement, for example, an incoming call notification, a ride hailing order progress change notification, or a takeout order progress change notification. The non-live notification indicates a notification that has a low timeliness requirement, for example, an application update notification or a content recommendation. A division rule of the live notification and the non-live notification may be preset in the application. After the application generates a notification, the application may determine that the current notification is a live notification or a non-live notification.

Optionally, after generating the notification, the service side sends the notification to a system side to indicate the system side to display the notification, to prompt the user. The notification may alternatively be described as a message, information, or the like. Optionally, the service side sends the notification to the system side by invoking an interface. Optionally, interfaces invoked by the service side to send the live notification and the non-live notification to the system side are the same or different.

In some examples, a live notification needs to make the user pay attention to the notification within specific validity time, so that accurate and valuable information can be transferred. After the validity time expires, the live notification becomes junk information. For example, the user determines a progress of a current order based on the takeout order progress change notification, where the order progress includes, for example, that a merchant has accepted the order, a rider has accepted the order, the rider is on the way to the store, the rider is delivering the order, and the order has been delivered. In this case, if the user does not timely pay attention to a notification that is displayed by the electronic device and that indicates that the merchant has accepted the order, but pays attention to the notification after a subsequent stage of the order progress occurs, the notification becomes an invalid junk message at a moment at which the user pays attention to the notification.

In addition, as a quantity of applications installed in the electronic device increases, and a quantity of notifications generated by different applications increases, it is also difficult for the user to pay attention to a live notification timely.

In addition, after some notifications are invalid, the electronic device still displays these invalid notifications, and display of these invalid information also interferes with the user's attention to another valid notification.

In this case, currently, a plurality of vendors configure a preset function in an electronic device, so that the electronic device highlights a live notification in a preset manner for display, or highlights, for display, a notification that the electronic device considers that the user needs to pay attention to timely.

For example, after receiving the live notification, the electronic device displays the live notification in a pop-up window manner, to remind the user to pay attention to the live notification. A window display location is generally located near a camera hole.

However, this current notification display method strongly depends on a hardware form, and is not universally applicable. In addition, only brief content of live notifications generated by a limited quantity of preconfigured real-time tasks can be displayed.

For another example, a plurality of notification display templates are preconfigured in some electronic devices. After receiving an important notification, the electronic device performs refined simplification processing on notification content based on the notification display template, and then displays processed notification content, so that the user quickly pays attention to the important notification received by the electronic device.

However, this current notification display method strongly depends on a processing capability of the electronic device, leading to an increase in a possibility that a notification is inaccurate. In addition, the electronic device displays a processed notification based on a preset display occasion, which cannot meet a timeliness requirement of the live notification, and the user cannot perceive the notification timely.

For another example, some electronic devices preconfigure a window on a desktop. After subsequently receiving an important notification of a preset application, the electronic device may display the received notification via the preset window, so that the user can perceive the notification timely.

However, because the preset window is displayed in a floating manner for long time, important information displayed on the desktop is blocked, and a user operation is affected. In addition, the current preset window supports display of notification messages of only some preset applications, and consequently, use scenarios are limited.

Therefore, according to a notification display method provided in embodiments of this application, after receiving a notification of a preset type, the electronic device performs reminding by using a capsule that can be adapted to a plurality of display scenarios. In addition, multi-capsule display is supported to meet requirements of a plurality of live notifications. In addition, the user may further indicate, based on a requirement, the electronic device to separately unfold a capsule, and display a card corresponding to the capsule, to meet a requirement of the user for flexibly viewing more notification content.

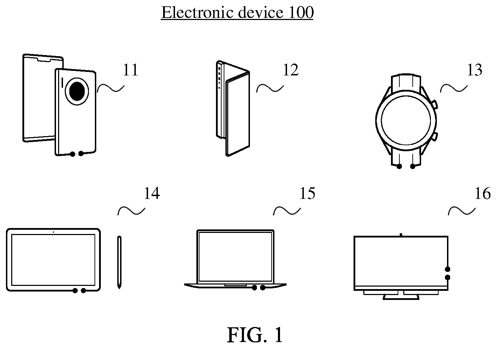

Optionally, the notification display method provided in embodiments of this application may be applied to an electronic device 100. As shown in FIG. 1, the electronic device 100 may be specifically a terminal device that has a display function, for example, a mobile phone 11, a foldable smartphone 12, a wearable device (like a smartwatch or a smart band) 13, a tablet computer 14, a notebook computer 15, a smart screen 16, a scroll screen mobile phone, a vehicle-mounted terminal, a computing machine, a computer, a personal computer (personal computer, PC), an ultra-mobile personal computer (ultra-mobile personal computer, UMPC), a netbook, a personal digital assistant (personal digital assistant, PDA), a virtual reality (virtual reality, VR) device/augmented reality (augmented reality, AR) device, or an artificial intelligence (artificial intelligence, AI) device. An operating system installed in the electronic device 100 includes but is not limited to iOS^{®}, Android^{®}, HarmonyOS^{®}, Windows^{®}, Linux^{®}, or another operating system. A specific type of the electronic device 100 and the installed operating system are not limited in this application.

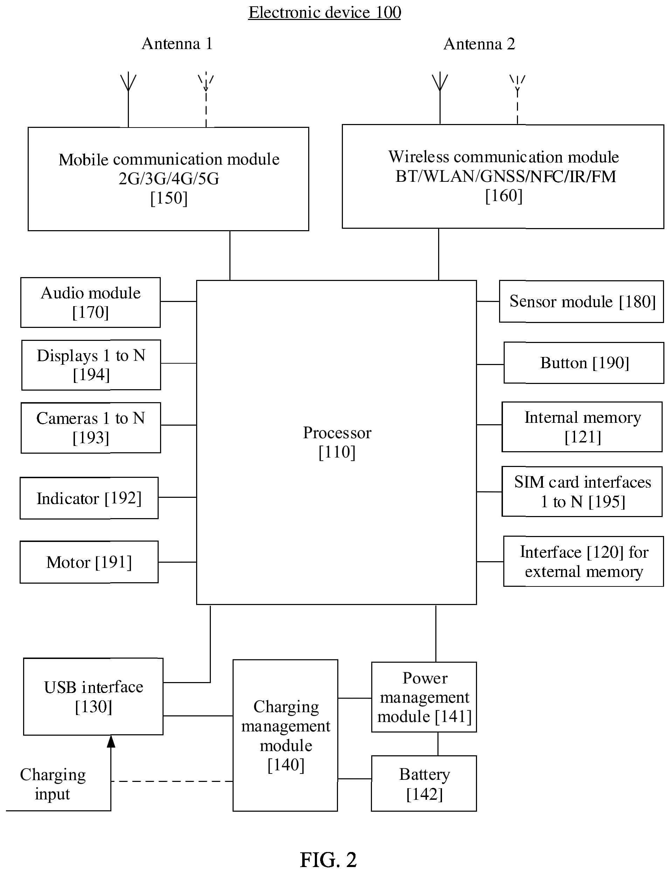

For example, as shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that an example structure in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and therefore, improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the electronic device 100.

The MIPI may be configured to connect the processor 110 to a peripheral component like the display 194 or the camera 193. The MIPI includes a camera serial interface (camera serial interface, CSI), a display serial interface (display serial interface, DSI), or the like. In some embodiments, the processor 110 communicates with the camera 193 through the CSI, to implement a photographing function of the electronic device 100. The processor 110 communicates with the display 194 through the DSI, to implement the display function of the electronic device 100.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. The USB interface may alternatively be configured to connect to a headset, to play audio via the headset. The interface may be further configured to connect to another first electronic device, for example, an AR device.

It may be understood that an interface connection relationship between modules illustrated in embodiments of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input via a wireless charging coil of the electronic device 100. The charging management module 140 may further supply power to the first electronic device via the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution of wireless communication that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some function modules of the mobile communication module 150 may be disposed in the processor 110. In some embodiments, at least some function modules of the mobile communication module 150 and at least some modules of the processor 110 may be disposed in a same component.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements the display function via the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), for example, may be manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light emitting diodes (quantum dot light emitting diodes, QLED), or the like. In some embodiments, the electronic device 100 may include 1 or N displays 194, where N is a positive integer greater than 1.

The camera 193 is configured to capture a static image or a video. An optical image of an object is generated through lens, and is projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include 1 or N cameras 193, where N is a positive integer greater than 1.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a non-volatile memory, such as at least one magnetic disk storage component, a flash memory component, and a universal flash storage (universal flash storage, UFS). The processor 110 performs various function applications and data processing of the electronic device 100 by running the instructions stored in the internal memory 121 and/or instructions stored in the memory disposed in the processor.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device 100 may perform music playing, recording, or the like via the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The touch sensor is also referred to as a "touch component". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor may alternatively be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may indicate a charging status and a power change, or may indicate a message, a missed call, a notification, and the like.

The SIM card interface 195 is configured to connect to a SIM card. The device 100 may support 1 or N SIM card interfaces, where N is a positive integer greater than 1.

In some embodiments, the electronic device supports displaying a notification in a plurality of display scenarios such as a screen-off interface, a lock screen, a notification center, a status bar, and a floating card. A system may preconfigure containers used to display a notification in different display scenarios, and the containers indicate a notification display style. For example, the electronic device displays, in the status bar by using a capsule display style, a notification sent by a service side. Screen-off interface display includes full-screen always on display (always on display, AOD), partial AOD, and functional AOD.

Optionally, after generating the notification, the service side in the electronic device may invoke a corresponding system interface based on a current display scenario, and write notification content into a corresponding preset container through the system interface. In this way, the system can obtain and display the notification.

Optionally, a service that generates a notification in the electronic device is, for example, an application, a meta service, or an applet. A system for managing notification display in the electronic device is, for example, an operating system installed in the electronic device.

In some embodiments, the notification generated by the service side may include a live notification (which may also be described as a live-type notification, a live-class notification, or the like) and a non-live notification (which may also be described as a non-live-type notification, a non-live-class notification, or the like) based on timeliness. The live notification indicates a notification that has a high timeliness requirement, for example, an incoming call notification or a takeout order progress change notification. The non-live notification indicates a notification that has a low timeliness requirement, for example, an application update notification or a content recommendation. The electronic device may determine, according to a preset rule, that a current notification is the live notification or the non-live notification.

In some embodiments, when determining that the notification needs to be displayed, the electronic device may determine, based on a current display scenario, information such as a display location, a display style, and displayed content of the notification in different display scenarios.

Optionally, the display scenarios include full-screen AOD, partial AOD, functional AOD, a lock screen, a notification center, a status bar, a floating card, desktop display, and the like. The display style includes capsule display, card display, visual image display, and the like. Optionally, the display style may further include a display color, for example, a capsule color, a card color, or a text color. The display color may be the same as or similar to a theme color of a service of a notification source. For example, if the notification source is an application, and a theme color of the application is blue, a corresponding capsule notification color may also be blue, so that the user can distinguish between different notification sources.

Optionally, in different display scenarios, priorities of different display locations are different. The electronic device may display the live notification at a corresponding priority location based on a priority of the live notification. For example, the electronic device preferentially displays a recently received live notification at a display location with a higher priority based on a sequence of receiving live notifications. For another example, for some live notifications that have a higher requirement on timeliness, the electronic device preferentially displays these live notifications at a location with a higher priority. For example, a timeliness requirement of a call notification is higher than that of another live notification. A rule for determining priorities of live notifications may be preset in the electronic device.

For example, in the display scenarios such as the full-screen AOD, the lock screen, the notification center, and the floating card, the electronic device displays notification content by using the display style such as the capsule display or the card display.

Optionally, displayed content of a card includes, for example, a notification source icon, primary and secondary text, visual detailed information, and an operable control. The notification source icon is, for example, an icon of the service for generating the notifications, for example, an application icon. The primary and secondary text is, for example, text content of the notification. The visual detailed information is, for example, detailed content of the notification, for example, text or an image. The operable control is, for example, a control that can be used by the user to perform an operation on a notification. For example, the notification is a timer notification, and a pause/continue control is displayed on a corresponding card. In response to an operation of the user on the pause/continue control, the electronic device may pause timing or continue timing without starting a timer application.

Optionally, displayed content of a capsule includes, for example, a notification source icon, a theme color of a notification source, and main information. Because a display area of the capsule is small, the service side may extract the main information of the notification, and send the main information to the system side, to trigger the system side to display the main information by using the capsule. In this way, it is convenient for the user to directly determine core information of the notification. In other words, a reminder function is implemented, and a display occupation proportion of the notification is effectively reduced.

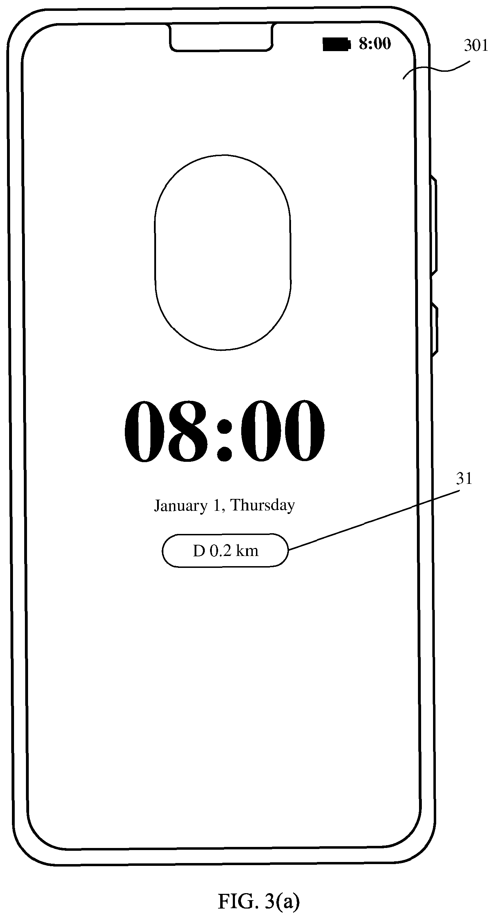

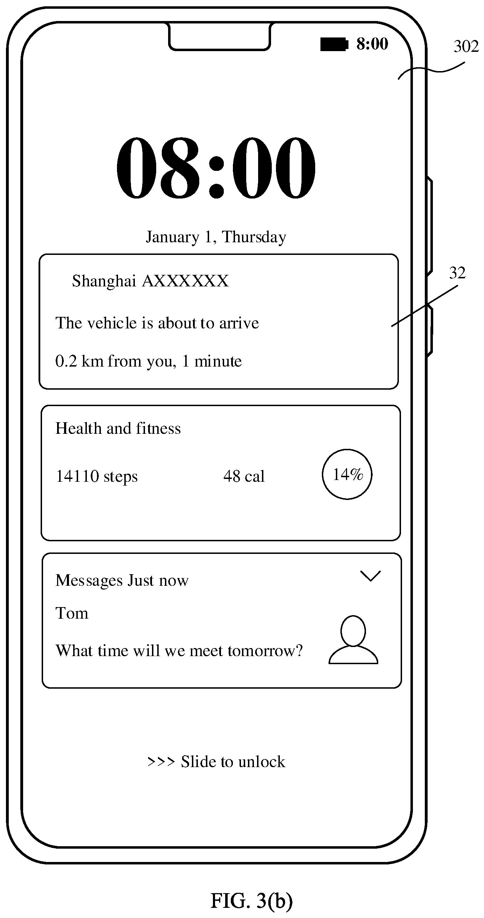

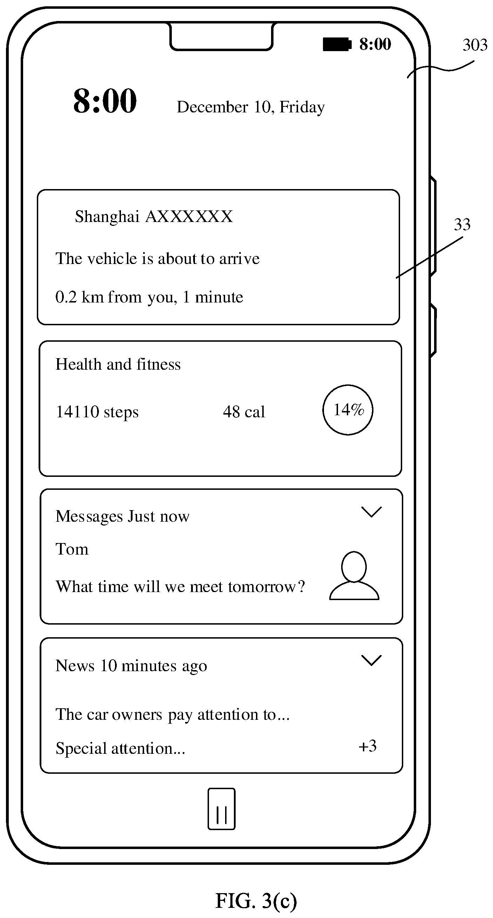

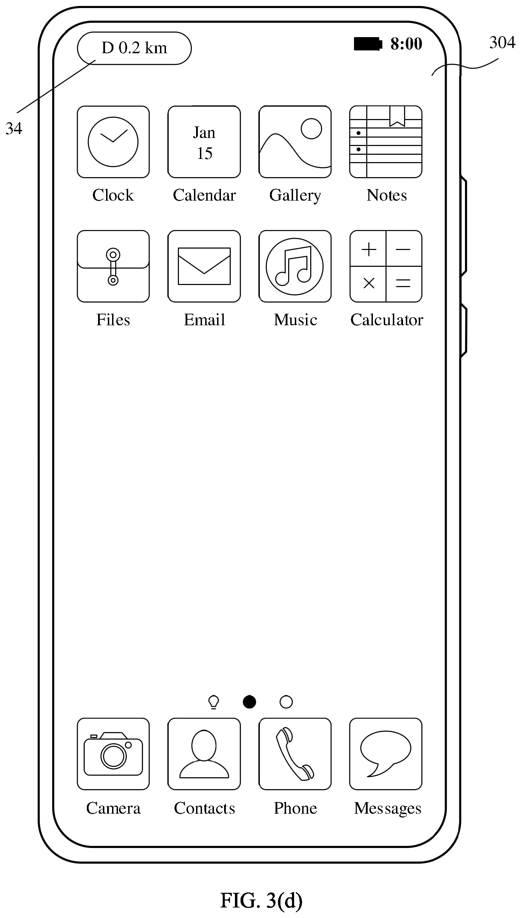

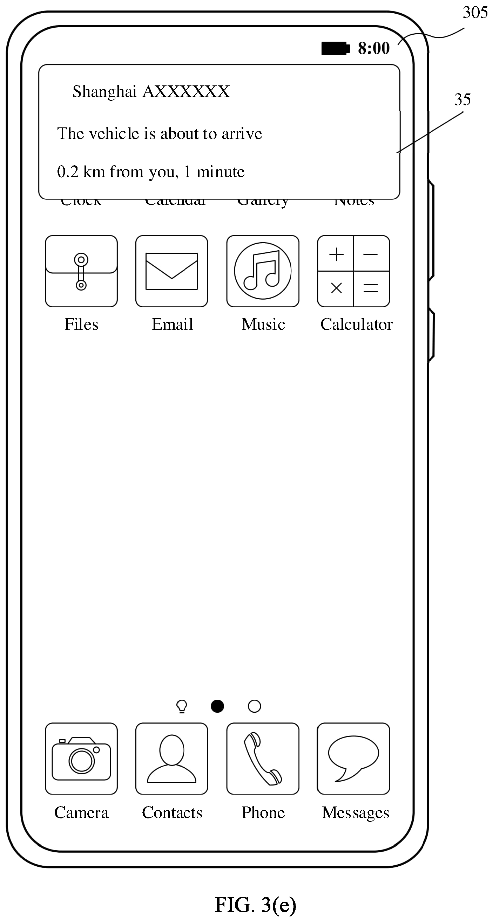

For example, as shown in FIG. 3(a), in a process of displaying a partial AOD interface 301, the electronic device receives an event A, and determines that the event A is an instant occurrence event, and a live notification corresponding to the event A needs to be displayed immediately. In this case, the electronic device may display, by using a capsule, a live notification 31 corresponding to the event A on the partial AOD interface 301 based on a current partial AOD display scenario. Alternatively, as shown in FIG. 3(b), in a process of displaying a lock screen 302, the electronic device receives an event A, and determines that the event A is an instant occurrence event, and a live notification corresponding to the event A needs to be displayed immediately. In this case, the electronic device may display, by using a card, a live notification 32 corresponding to the event A at a location with a highest priority on the lock screen 302 based on a current lock screen display scenario. Alternatively, as shown in FIG. 3(c), in a process of displaying a notification center interface 303, the electronic device receives an event A, and determines that the event A is an instant occurrence event, and a live notification corresponding to the event A needs to be displayed immediately. In this case, the electronic device may display, by using a card, a live notification 33 corresponding to the event A at a location with a highest priority on the notification center interface 303 based on a current notification center interface display scenario. Alternatively, as shown in FIG. 3(d), in a process of displaying a home screen 304, the electronic device receives an event A, and determines that the event A is an instant occurrence event, and a live notification corresponding to the event A needs to be displayed immediately. In this case, the electronic device may display, by using a capsule, a live notification 34 corresponding to the event A in a home screen status bar based on a current desktop display scenario. Alternatively, as shown in FIG. 3(e), in a process of displaying a home screen 305, the electronic device receives an event A, and determines that the event A is an instant occurrence event, and a live notification corresponding to the event A needs to be displayed immediately. In this case, the electronic device may display, by using a floating card, a live notification 35 corresponding to the event A at a location with a highest priority on the home screen 305 based on a current floating card display scenario.

It should be understood that, in the scenarios shown in FIG. 3(d) and FIG. 3(e), an example in which the live notification is received in a process of displaying the home screen by the electronic device is used to describe a process of displaying the live notification. In a process of displaying an application interface, the electronic device may also display the received live notification in a capsule or card display manner.

The following describes in detail the process of displaying the live notification by using an example in which the electronic device displays the live notification in the capsule display style in the process of displaying the home screen. An example in which the electronic device displays the live notification in the capsule display style in the process of displaying the application interface is not described.

In some embodiments, a status bar is configured on a top of the display of the electronic device, and the electronic device may display the status bar in a process of running an application. Optionally, a capsule notification is displayed in the status bar on the top of the display of the electronic device, so that the user is reminded in a timely manner. Optionally, after receiving the notification corresponding to an event, the electronic device needs to determine whether remaining display space in the status bar meets a display requirement of the capsule notification. Optionally, when a width of the remaining display space is greater than or equal to a width of the to-be-displayed capsule notification, the electronic device determines that the capsule notification can be displayed.

In some examples, a camera hole that matches a camera mounting location is disposed on the top of the display of the electronic device, and space other than the camera hole in top space may be used to display the status bar. It should be understood that cameras of some electronic devices do not occupy space of displays, and therefore, all top space of the display may be used to display the status bar.

Optionally, the display space in the status bar includes fixed display space and movable display space. The fixed display space is used to display preconfigured fixed content, and the movable display space is used to display configurable movable content. For example, the fixed display space is used to display one or more of time, a wireless network status, a wired network status of a SIM card 1, a wired network status of a SIM card 2, a battery level, and the like. The movable display space is used to display a capsule notification, an indicator of a non-live notification, other system statuses (such as a do-not-disturb indicator and a device vibration indicator), and the like, where for example, available width of the capsule notification in the status bar=width of the status bar-width of the fixed display space-spacing between the fixed display space and the movable display space.

The following describes in detail a process of displaying a notification by using an example in which the fixed display space is used to display the battery level and the time.

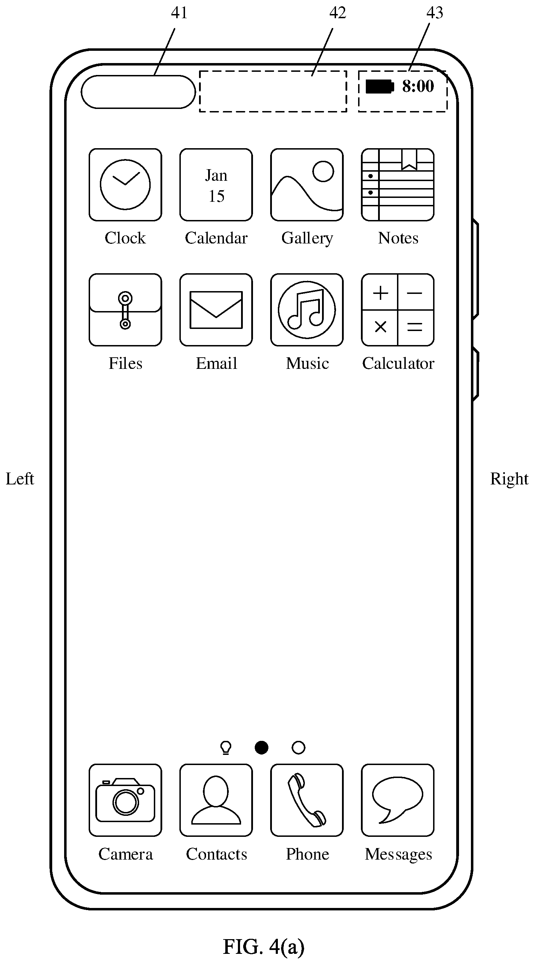

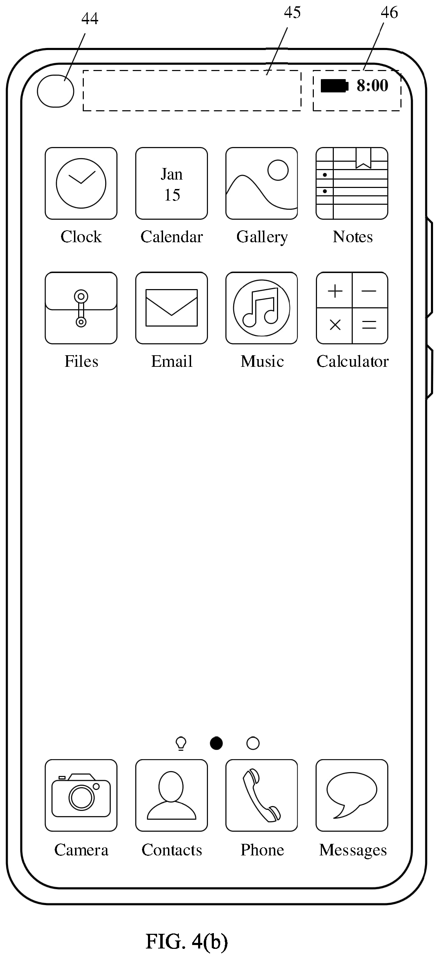

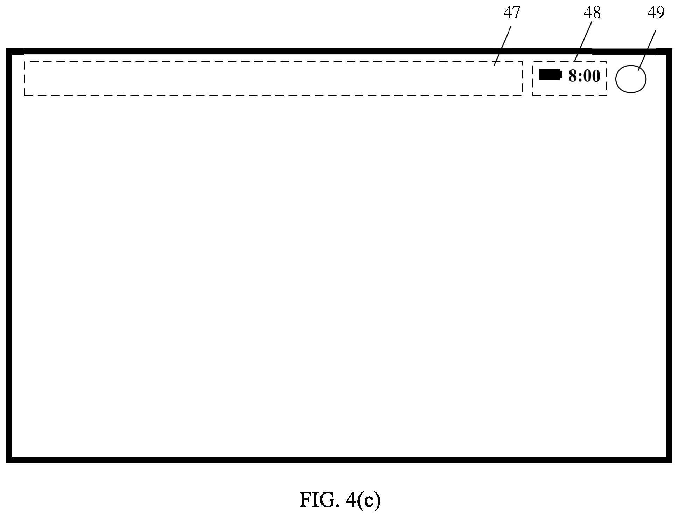

For example, if electronic devices of different types or models have different widths, available widths of capsule notifications are also different. For example, as shown in FIG. 4(a), top space of a display of a mobile phone 1 sequentially includes an elliptical camera hole 41, movable display space 42, and fixed display space 43. For example, as shown in FIG. 4(b), top space of a display of a mobile phone 2 sequentially includes a circular camera hole 44, movable display space 45, and fixed display space 46. The two mobile phones have a same width, and both the fixed display space 43 and the fixed display space 46 are used to display battery levels and time. Because a width of the elliptical camera hole 41 is greater than a width of the circular camera hole 44, a width of the movable display space 42 is smaller than a width of the movable display space 45, and the mobile phone 2 has a longer available width of a capsule notification. For another example, as shown in FIG. 4(c), top space of a display of a tablet computer sequentially includes movable display space 47, fixed display space 48, and a circular camera hole 49. A width of the display of the tablet computer is greater than the widths of the mobile phone 1 and the mobile phone 2. Therefore, the tablet computer has a longer available width of a capsule notification.

The following describes a process in which an electronic device adaptively displays a capsule notification based on an available width of the capsule notification.

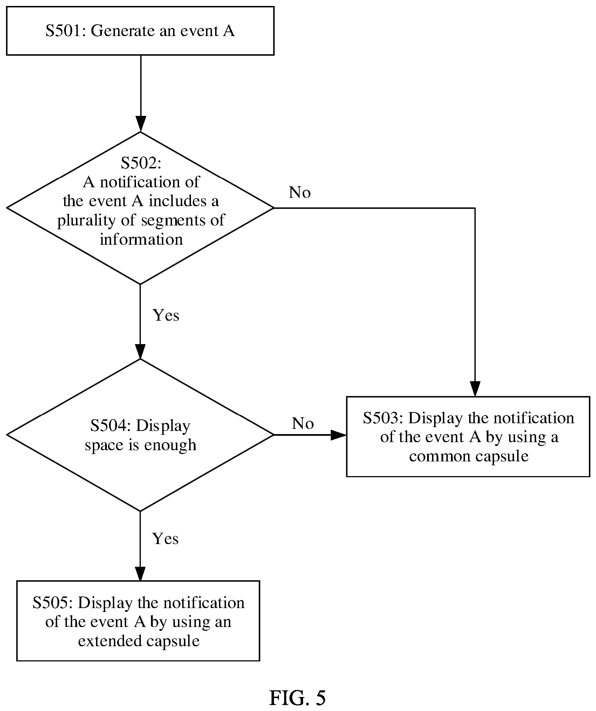

FIG. 5 is a schematic flowchart of a notification display method according to an embodiment of this application. It should be noted that the method is not limited to a specific sequence described in FIG. 5 and below. It should be understood that in another embodiment, a sequence of some steps in the method may be exchanged based on an actual requirement, or some steps in the method may be omitted or deleted. The method includes the following steps.

S501: An electronic device generates an event A.

In some embodiments, the electronic device generates the event A in response to a user operation, and determines that a user needs to be notified of the event A.

For example, the electronic device detects an operation of the user in a ride hailing application, and generates an order 1. In this case, the electronic device generates the event A indicating the order 1. In a process of changing a status of the event A, the electronic device generates a corresponding notification, to notify the user of a progress change status of the order 1.

Optionally, the event A is an event for generating a live notification. Optionally, the electronic device may generate different types of live notifications, for example, a system task-type live notification, a third-party service-type live notification, and a predetermined live notification. The electronic device may display the live notification at a proper occasion based on different live notification types.

S502: The electronic device determines whether the notification of the event A includes a plurality of segments of information, and if no, performs step S503; or if yes, performs step S504.

In some embodiments, formats of content displayed in a notification, for example, a color, an icon, and an information amount, are preconfigured on a server side. The information amount indicates how many segments of indication information are included in the live notification. Optionally, limited by a display width, both the information amount and a length of each segment of information are less than corresponding thresholds.

For example, a ride hailing notification preconfigured in the ride hailing application includes two segments of information, for example, information indicating a distance between a vehicle and a passenger or a destination, and information indicating estimated time required for the distance.

S503: The electronic device displays the notification of the event A by using a common capsule.

In some embodiments, the electronic device is configured with capsule specifications for displaying different amounts of information. For example, the common capsule may be used to display one segment of information, and an extended capsule may be used to display a plurality of segments of information.

In some examples, if the electronic device determines that the notification of the event A includes only one segment of information, the electronic device may display the notification of the event A by using the common capsule.

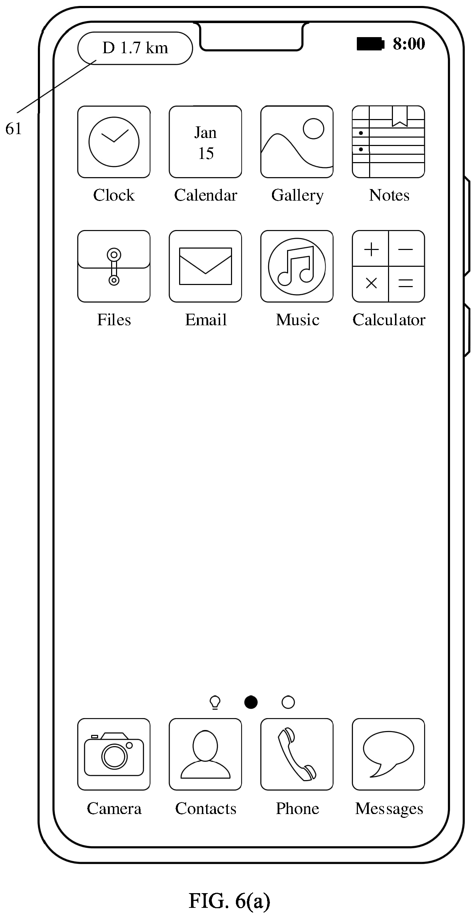

For example, as shown in FIG. 6(a), the ride hailing application generates a ride hailing notification of a ride hailing event in response to a ride hailing operation of the user in the ride hailing application. The electronic device determines that the ride hailing notification generated by the ride hailing application includes the information indicating the distance between the vehicle and the passenger. In this case, the electronic device displays information 61 of the ride hailing notification by using a common capsule. An indicator of the ride hailing application is further displayed on the capsule, and a color of the capsule is the same as a theme color of the ride hailing application.

S504: The electronic device determines whether display space is enough, and if yes, performs step S505; or if no, performs step S503.

S505: The electronic device displays the notification of the event A by using the extended capsule.

In some embodiments, if the electronic device determines that the notification of the event A includes the plurality of segments of information, the electronic device determines, based on an available width of the capsule notification, whether remaining display space in a status bar can meet a display requirement of the plurality of segments of information. If yes, the electronic device may display the notification of the event A by using the extended capsule, that is, perform step S505. If no, the electronic device may display the notification of the event A by using the common capsule, that is, perform step S503.

In some examples, the electronic device may further select a capsule specification based on a width of a display. For example, a device with a small display, such as a non-foldable smartphone or a foldable smartphone in a folded state, displays a notification by using a common capsule. For another example, a device with a large display, such as a foldable smartphone in an unfolded state or a tablet computer, displays a notification by using an extended capsule.

In some examples, the remaining display space in the status bar meets a display requirement of some of the plurality of segments of information. In this case, the electronic device may adjust a width of the extended capsule to display the some segments of information. For example, the notification of the event A includes three segments of information. If the electronic device determines that the remaining display space in the status bar can display two of the three segments of information, the electronic device adjusts the width of the extended capsule to display the two segments of information.

In some examples, importance degrees of different information segments are preconfigured on a service side. In a process of adjusting a display length of the capsule based on the remaining display space in the status bar, the electronic device may sort information segments based on the importance degrees of the different information segments, and preferentially display an information segment with a high importance degree.

In some examples, movable display space in the status bar is further used to display displayed content such as an indicator of a non-live notification, and another system status. A display priority of a live notification is higher than a display priority of other displayed content in the movable display space. In this case, when the remaining display space in the status bar is not enough, the capsule notification may further preempt display space of the other displayed content in the displayed movable display space.

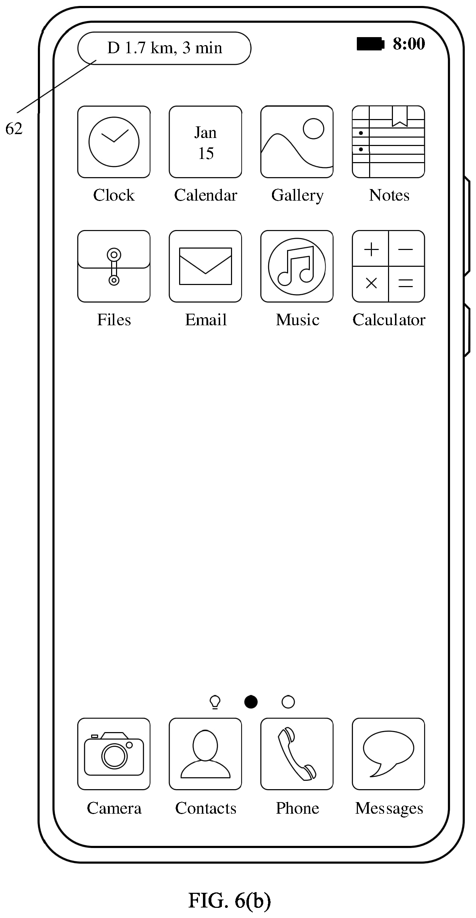

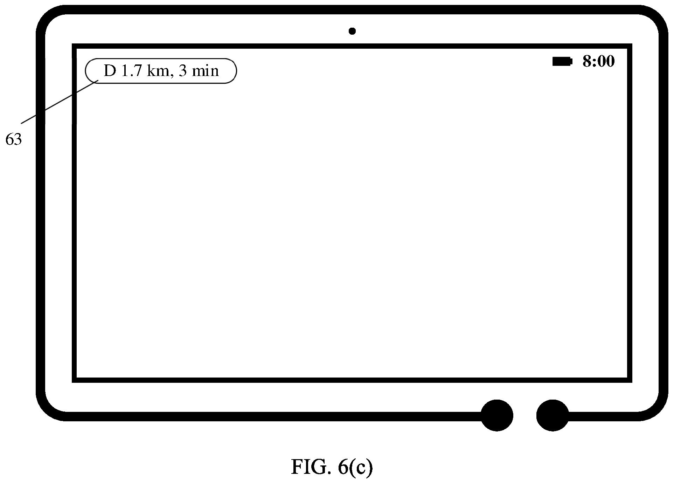

For example, the ride hailing notification preconfigured in the ride hailing application includes the information indicating the distance between the vehicle and the passenger or the destination, and the information indicating the estimated time required for the distance. For example, as shown in FIG. 6(a), after obtaining the ride hailing notification, a mobile phone whose notch occupies a large area of a display determines that remaining display space in a status bar is not enough. In this case, as shown in a reference numeral 61, the mobile phone displays the ride hailing notification by using the common capsule. Indication information of the ride hailing notification includes the information that is of a high importance degree and that indicates the distance between the vehicle and the passenger. For another example, as shown in FIG. 6(b), after obtaining the ride hailing notification, a mobile phone determines that remaining display space in a status bar is enough. In this case, as shown in a reference numeral 62, the mobile phone displays the ride hailing notification by using the extended capsule. Indication information of the ride hailing notification includes all the preconfigured information. For still another example, as shown in FIG. 6(c), after obtaining the ride hailing notification, a tablet computer determines that remaining display space in a status bar of a display is enough. In this case, as shown in a reference numeral 63, the tablet computer displays the ride hailing notification by using the extended capsule. Indication information of the ride hailing notification includes all the preconfigured information.

In this way, the electronic device displays the capsule in the status bar, so that the user can browse important content at a glance in any scenario upon use of the device, and it is convenient for the user to obtain high timeliness information at a proper occasion.

In addition, the notification displayed in the status bar does not interfere with display and an operation of the current device, thereby avoiding interference with a user operation.

In addition, the electronic device adaptively adjusts the capsule specification based on the remaining display space in the status bar, to utilize a device form to a maximum extent, enrich capsule display effect, and present richer content to the user.

In some embodiments, in a process of displaying the live notification by the electronic device by using the capsule, a live notification generated by a new event may need to be displayed, that is, the electronic device needs to display a plurality of live notifications.

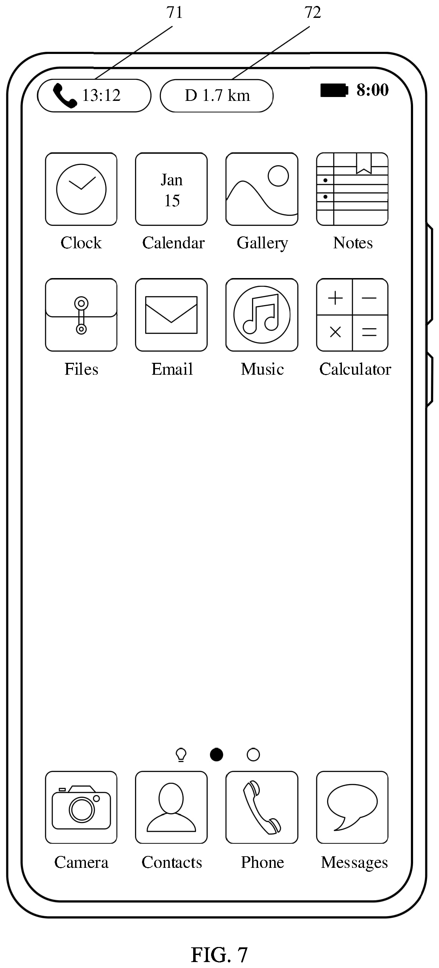

For example, as shown in FIG. 7, the electronic device receives the ride hailing notification in a process of displaying a call capsule notification 71. In this case, the electronic device may further display a ride hailing capsule notification 72.

In some examples, the electronic device determines priorities of the plurality of live notifications according to a preset sorting rule, to display the plurality of live notifications.

Optionally, the preset sorting rule includes, for example, one or more of the following: a notification creation time sequence, a notification node refresh time sequence, another time sequence of pinning an important type, priorities determined by a system based on an event type, intelligent sorting based on data used or viewed by the user, a sequence manually set by the user, and a notification type.

For example, as shown in FIG. 7, in the process of displaying the call capsule notification 71, the electronic device receives the ride hailing notification, and the electronic device determines that a priority of the ride hailing notification is lower than a priority of a call notification. In this case, the electronic device may display the ride hailing capsule notification 72 at a location with a lower priority on the right side of the call capsule notification 71. Alternatively, in a process of displaying the ride hailing capsule notification 72, the electronic device receives a call notification, and the electronic device determines that a priority of the call notification is higher than a priority of the ride hailing notification. In this case, the electronic device may display the call capsule notification 71 at a location of an original ride hailing capsule notification 73, and display the ride hailing capsule notification 72 at a location with a lower priority on the right side of the call capsule notification 71.

In some examples, in a process of displaying a plurality of capsule notifications, the electronic device may alternatively determine, based on a size of the remaining display space in the status bar, a quantity of segments of indication information in the capsules, whether to display the capsules in a tiled manner, or in a stacked or folded manner, or the like.

For example, in the scenario shown in FIG. 7, the display space is enough, and the electronic device displays the call capsule notification 71 and the ride hailing capsule notification 72 in the tiled manner.

The following describes a process of displaying the plurality of live notifications.

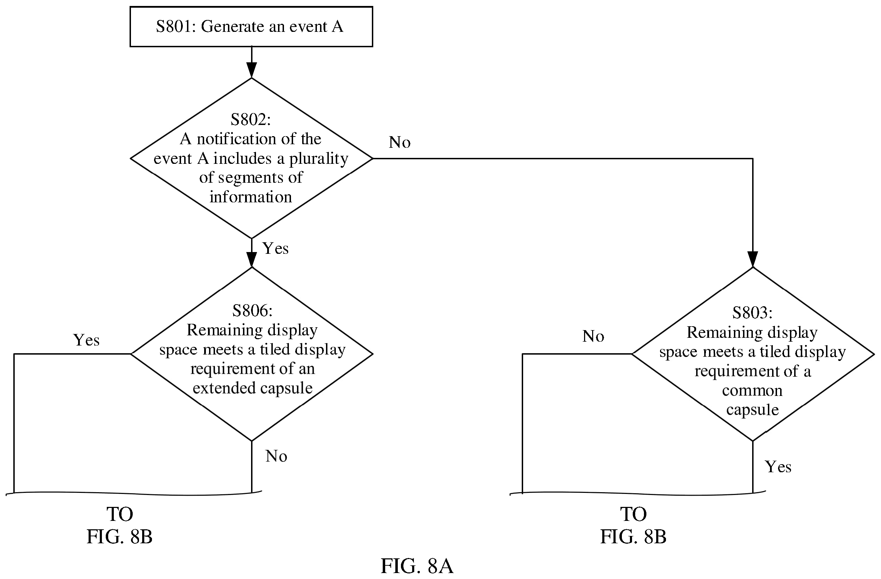

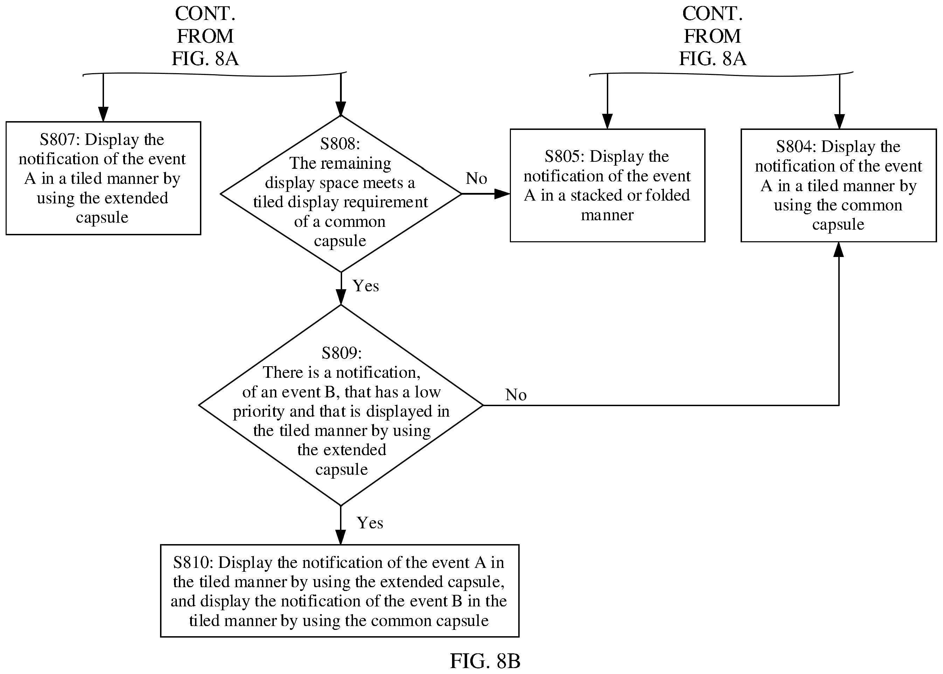

FIG. 8A and FIG. 8B are a schematic flowchart of another notification display method according to an embodiment of this application. It should be noted that the method is not limited to a specific sequence described in FIG. 8A and FIG. 8B and below. It should be understood that in another embodiment, a sequence of some steps in the method may be exchanged based on an actual requirement, or some steps in the method may be omitted or deleted. The method includes the following steps.

S801: An electronic device generates an event A.

S802: The electronic device determines whether a notification of the event A includes a plurality of segments of information, and if no, performs step S803; or if yes, performs step S806.

Optionally, for content of step S801 and step S802, refer to related content of step S501 and step S502. Details are not described herein again.

S803: The electronic device determines whether remaining display space meets a tiled display requirement of a common capsule, and if yes, performs step S804; or if no, performs step S805.

S804: The electronic device displays the notification of the event A in a tiled manner by using a common capsule.

S805: The electronic device displays the notification of the event A in a stacked or folded manner.

In some embodiments, after determining that the to-be-displayed notification of the event A includes a segment of information, the electronic device may obtain the remaining display space in a status bar, and determine whether the remaining display space is enough. If the remaining display space is enough, the electronic device may display the notification of the event A in the tiled manner in a common capsule display manner, that is, perform step S804. If the remaining display space is not enough, the electronic device may display the notification of the event A in the stacked or folded display manner.

Optionally, when capsules are displayed in the stacked manner, a capsule covers a part or all of another capsule, or is partially or completely covered by another capsule.

Optionally, when capsules are displayed in the folded manner, different capsules are separately displayed.

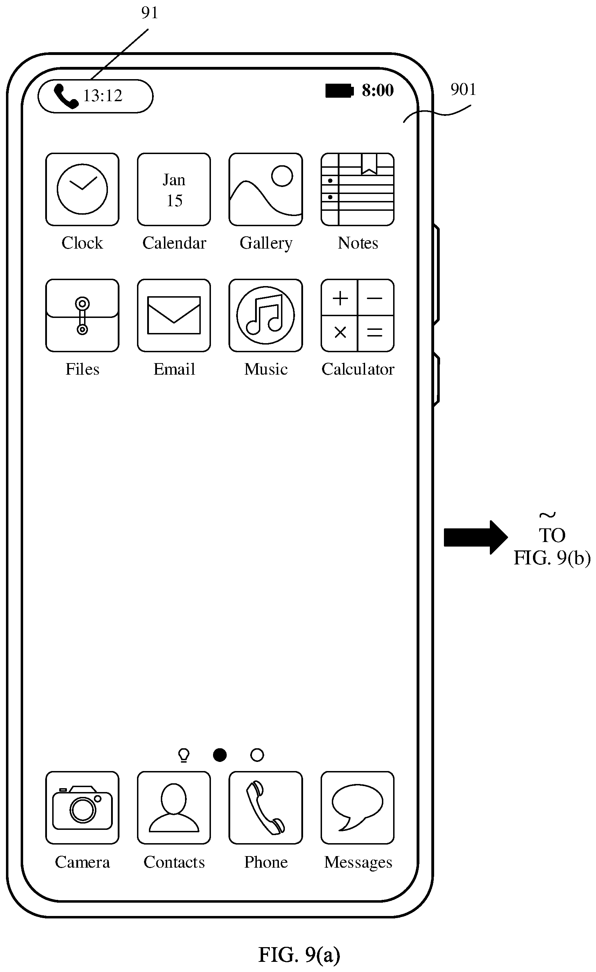

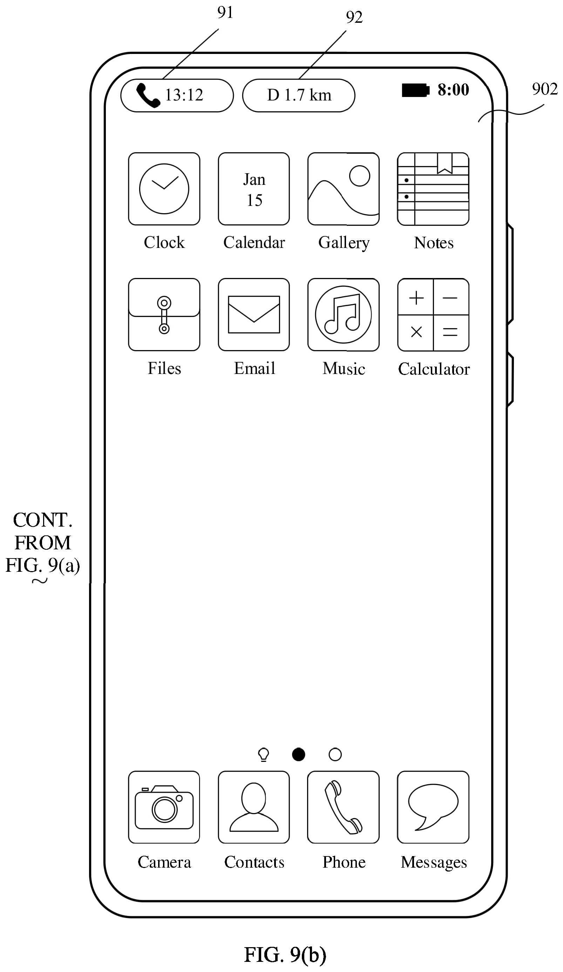

For example, on an interface 901 shown in FIG. 9(a), in a process of displaying a call capsule notification 91 in a status bar in the tiled manner, the electronic device receives a ride hailing notification, and the electronic device determines that the ride hailing notification includes a segment of information. Remaining display space in the status bar meets a tiled display requirement of the common capsule. In this case, on an interface 902 shown in FIG. 9(b), the electronic device may display a ride hailing capsule notification 92 in the tiled manner, and the ride hailing capsule notification 92 is the common capsule.

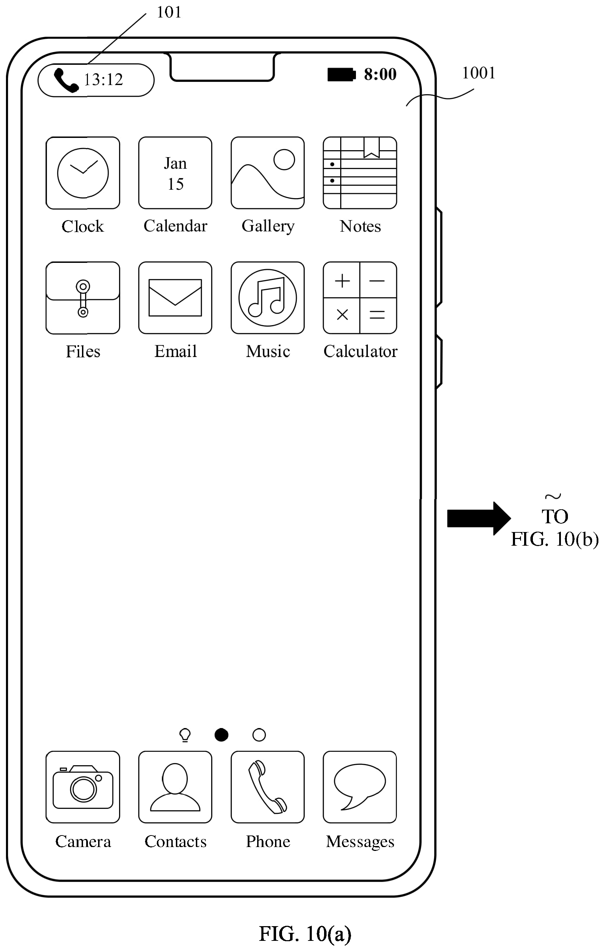

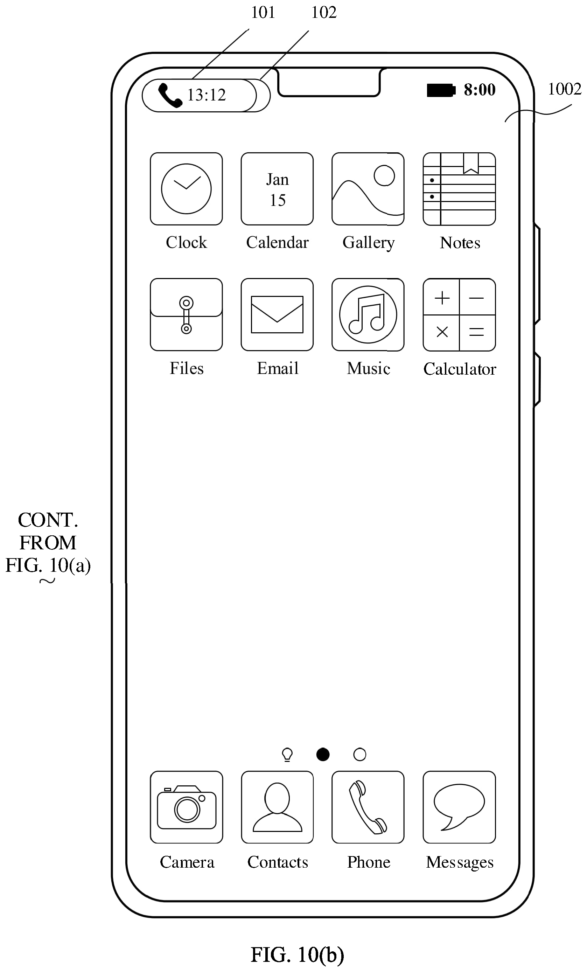

For another example, on an interface 1001 shown in FIG. 10(a), in a process of displaying a call capsule notification 101 in a status bar in the tiled manner, the electronic device receives a ride hailing notification, and the electronic device determines that the ride hailing notification includes a segment of information. However, remaining display space in the status bar does not meet a tiled display requirement of the common capsule. In this case, on the interface 1002 shown in FIG. 10(b), the electronic device may display a call capsule notification 101 and a ride hailing capsule notification 102 in the stacked manner based on priorities of the ride hailing notification and a call notification. The call capsule notification 101 with a higher priority partially covers the ride hailing capsule notification 102 with a lower priority.

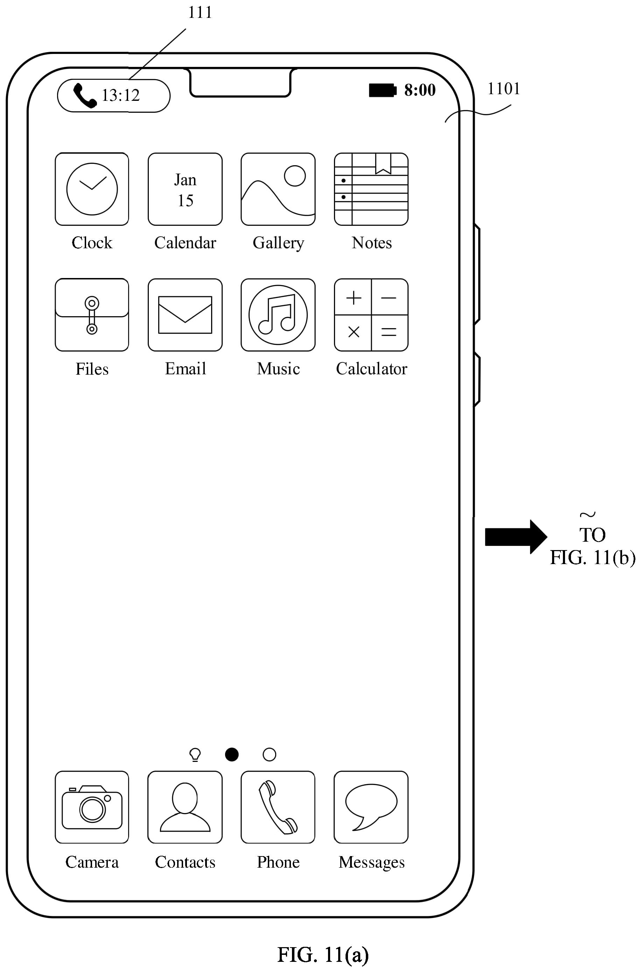

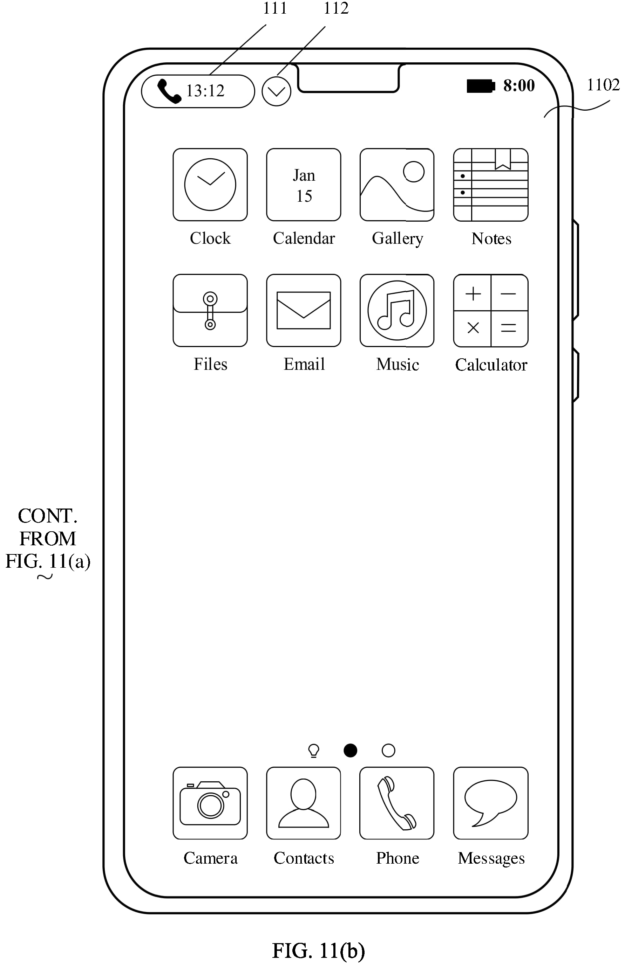

For still another example, on an interface 1101 shown in FIG. 11(a), in a process of displaying a call capsule notification 111 in a status bar in the tiled manner, the electronic device receives a ride hailing notification, and the electronic device determines that the ride hailing notification includes a segment of information. However, remaining display space in the status bar does not meet a tiled display requirement of the common capsule. In this case, on the interface 1102 shown in FIG. 11(b), the electronic device may display a call capsule notification 111 and a ride hailing capsule notification 112 in the folded manner based on priorities of the ride hailing notification and a call notification. The ride hailing capsule notification 112 with a lower priority is completely folded and hidden. As shown on the interface 1102, when the capsule is displayed in the folded manner, the electronic device displays the folding control 112 used to unfold the folded capsule.

In some embodiments, a notification with a lower priority is displayed in the stacked or folded manner. Subsequently, for example, if display of a notification with a higher priority ends, the electronic device may determine, based on priorities of remaining to-be-displayed notifications, which notification may no longer be displayed in the stacked or folded manner, or the like, and whether to further display a notification in the stacked or folded manner. In this way, the notification with the lower priority may alternatively be moved forward to a display location of the original notification with the higher priority for display. Optionally, if remaining display space is enough after the display of the notification with the higher priority ends, a notification that can be displayed only as the common capsule may alternatively be displayed as an extended capsule.

In some embodiments, when the notification of the event A is displayed in the stacked (or folded) manner, and display of a plurality of displayed notifications does not end, after receiving a new notification, the electronic device displays the new notification in the stacked (or folded) manner based on the priorities.

In some embodiments, when determining that a part of a notification needs to be hidden for display, the electronic device obtains a preconfigured display rule. If the display rule indicates that the notification is displayed in the stacked manner, the electronic device displays the notification in the stacked manner. If the display rule indicates that the notification is displayed in the folded manner, the electronic device displays the notification in the folded manner.

Optionally, the electronic device determines the display rule in a manner such as a system preconfiguration or a user setting.

In this way, when the display space is not enough, the electronic device may display a live notification in the stacked or folded manner, to meet a requirement of the live notification for timeliness.

S806: The electronic device determines whether the remaining display space meets the tiled display requirement of the extended capsule, and if yes, performs step S807; or if no, performs step S808.

S807: The electronic device displays the notification of the event A in the tiled manner by using the extended capsule.

In some embodiments, after determining that the to-be-displayed notification of the event A includes the plurality of segments of information, the electronic device may obtain the remaining display space in the status bar, and determine whether the remaining display space is enough. If the remaining display space is enough, the electronic device may display the notification of the event A in the tiled manner by using the extended capsule, that is, perform step S807. If the remaining display space is not enough, the electronic device further determines whether the remaining display space can meet the display requirement of the common capsule, that is, performs step S808.

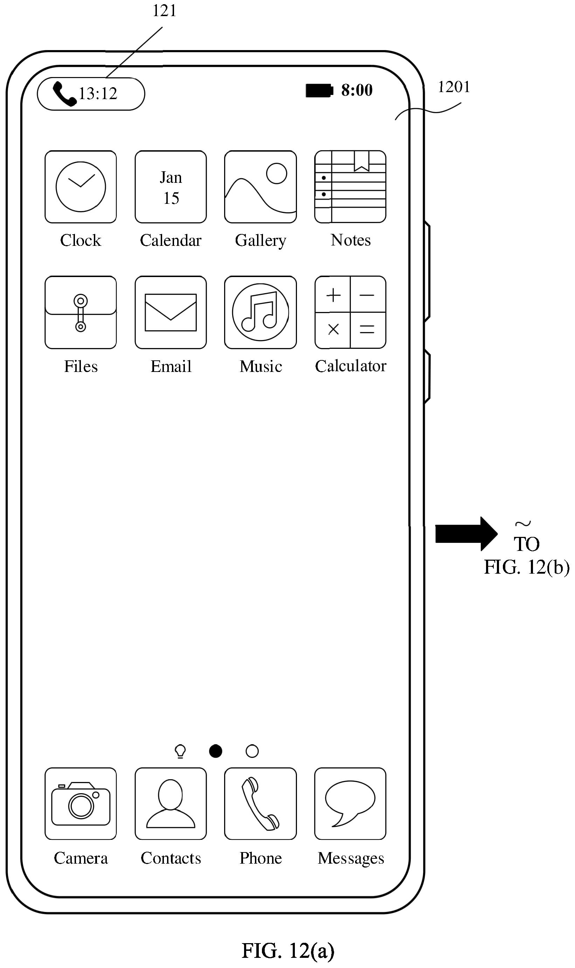

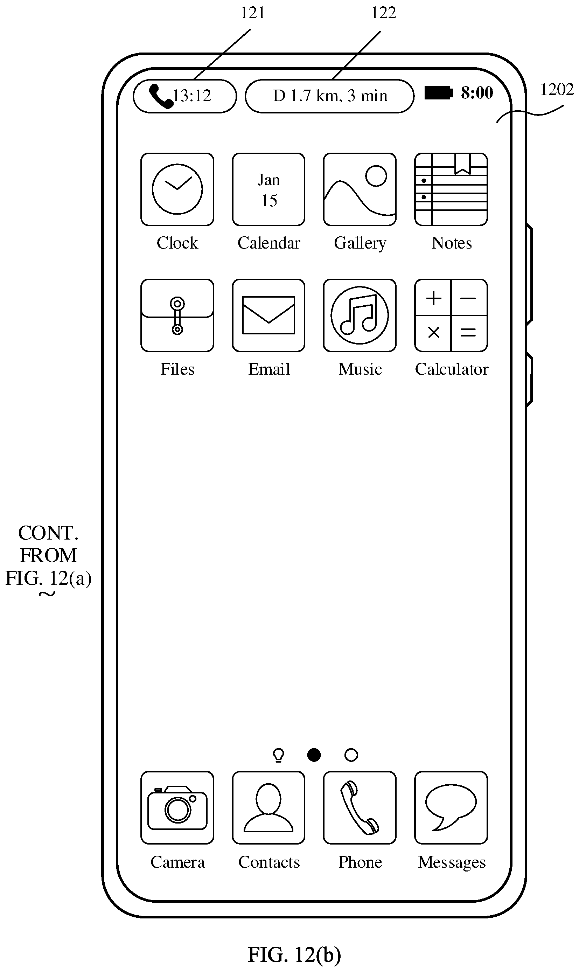

For example, on an interface 1201 shown in FIG. 12(a), in a process of displaying a call capsule notification 121 in a status bar in the tiled manner, the electronic device receives a ride hailing notification, and the electronic device determines that the ride hailing notification includes a plurality of segments of information. Remaining display space in the status bar meets a tiled display requirement of the extended capsule required by the plurality of segments of information. In this case, on an interface 1202 shown in FIG. 12(b), the electronic device may display a ride hailing capsule notification 122 in the tiled manner, and the ride hailing capsule notification 122 is the extended capsule.

In this way, when a plurality of live notifications are displayed, the electronic device may adaptively select, based on a size of the remaining space, the common capsule or the extended capsule to display a new live notification.

S808: The electronic device determines whether the remaining display space meets the tiled display requirement of the common capsule, and if yes, performs step S809; or if no, performs step S805.

In some embodiments, the electronic device determines that the to-be-displayed notification of the event A includes the plurality of segments of information, and the remaining display space in the status bar does not meet a requirement that the extended capsule displays the notification of the event A in the tiled manner. In this case, the electronic device may determine whether the remaining display space meets the display requirement of the common capsule. If the remaining display space does not meet the display requirement of the common capsule, the electronic device may display the notification of the event A in the stacked or folded manner, that is, perform step S805. If the remaining display space can meet the display requirement of the common capsule, the electronic device may display the notification of the event A by using the common capsule. Alternatively, the electronic device may further determine whether there is a notification with a low priority displayed by using the extended capsule in notifications that have been displayed in the tiled manner, that is, perform step S809.

S809: The electronic device determines whether there is a notification, of an event B, that has a low priority and that is displayed in the tiled manner by using the extended capsule; and if yes, performs step S810; or if no, performs step S804.

S810: The electronic device displays the notification of the event A in the tiled manner by using the extended capsule, and displays the notification of the event B in the tiled manner by using the common capsule.

In some embodiments, the electronic device determines that the to-be-displayed notification of the event A includes the plurality of segments of information, and the remaining display space in the status bar meets the tiled display requirement of the common capsule. In this case, the electronic device may further determine, based on priorities of the plurality of current notifications, whether there is a notification whose priority is lower than that of the notification of the event A in the notifications that have been displayed in the tiled manner by using the extended capsule. If there is a notification whose priority is lower than that of the notification of the event A, the electronic device may display the notification with the low priority in the tiled manner by using the common capsule, to save more display space for displaying the notification of the event A in the tiled manner by using the extended capsule, that is, perform step S810. If there is no notification whose priority is lower than that of the notification of the event A, the electronic device may display the notification of the event A in the tiled manner by using the common capsule, that is, perform step S804.

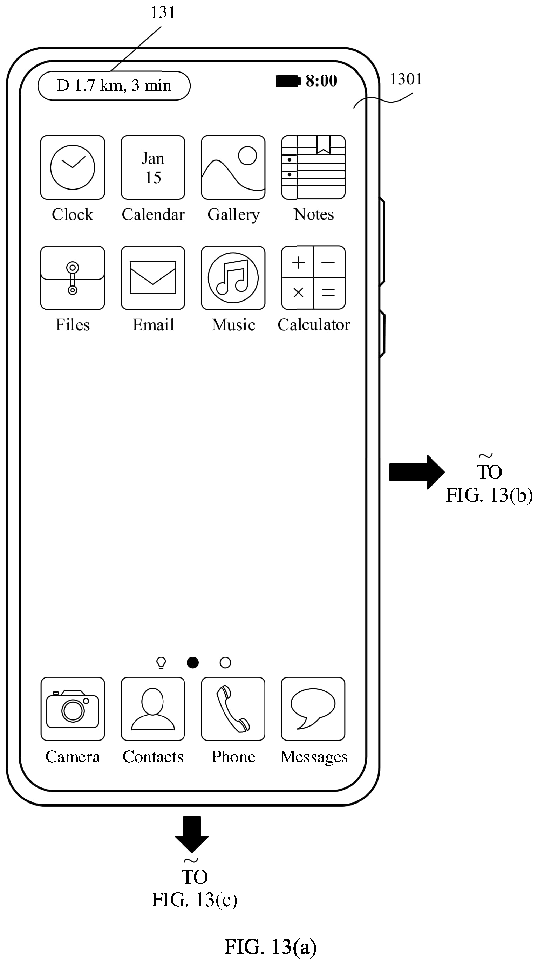

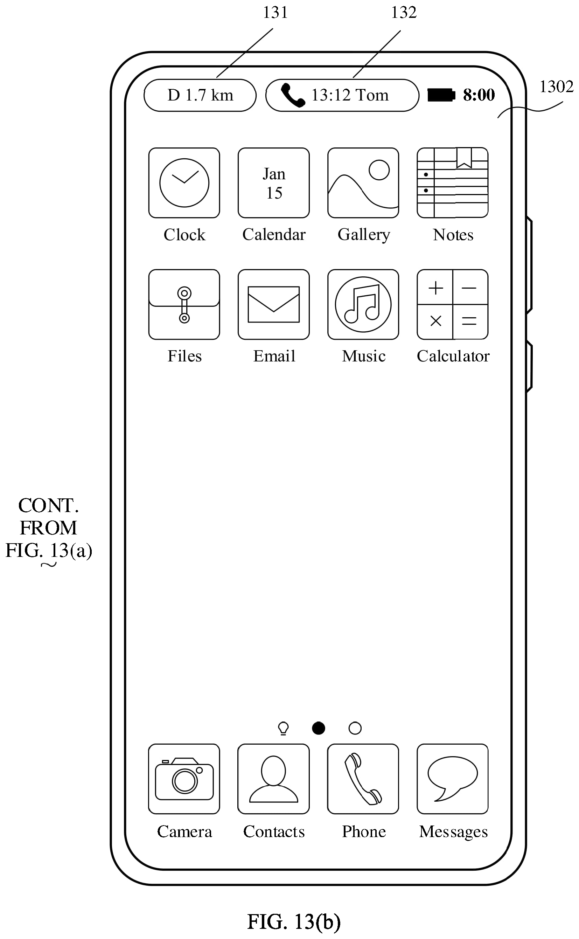

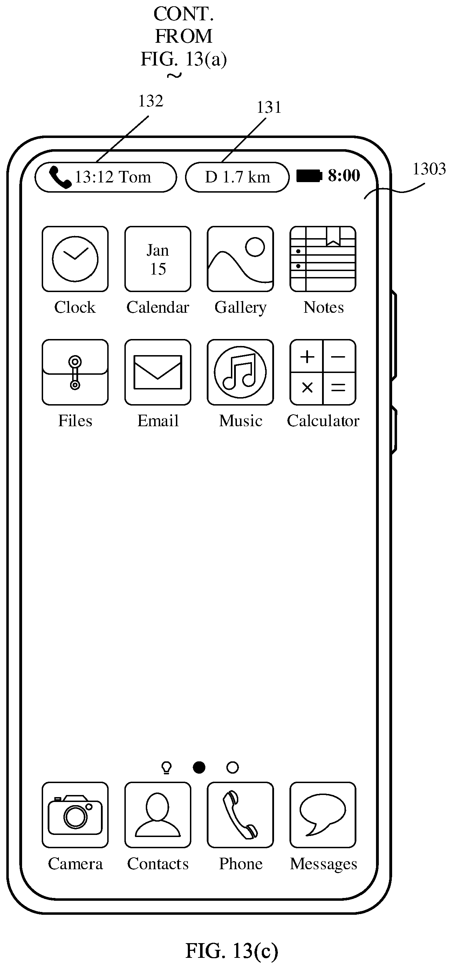

For example, on an interface 1301 shown in FIG. 13(a), in a process of displaying a ride hailing capsule notification 131 in a status bar in the tiled manner, the electronic device receives a call notification, and the electronic device determines that the call notification includes a plurality of segments of information. However, remaining display space in the status bar can meet only a tiled display requirement of the common capsule. In this case, on an interface 1302 shown in FIG. 13(b), the electronic device determines that a priority of the call notification is higher than a priority of the ride hailing notification, and may change the ride hailing notification 131 displayed in the tiled manner by using the extended capsule to being displayed in the tiled manner by using the common capsule, and display a call capsule notification 132 in the tiled manner by using the extended capsule. Alternatively, on an interface 1303 shown in FIG. 13(c), the electronic device displays a call capsule notification 132 in the tiled manner at a display location with a higher priority by using the extended capsule, and displays the ride hailing notification 131 in the tiled manner at a display location with a low priority by using the common capsule.

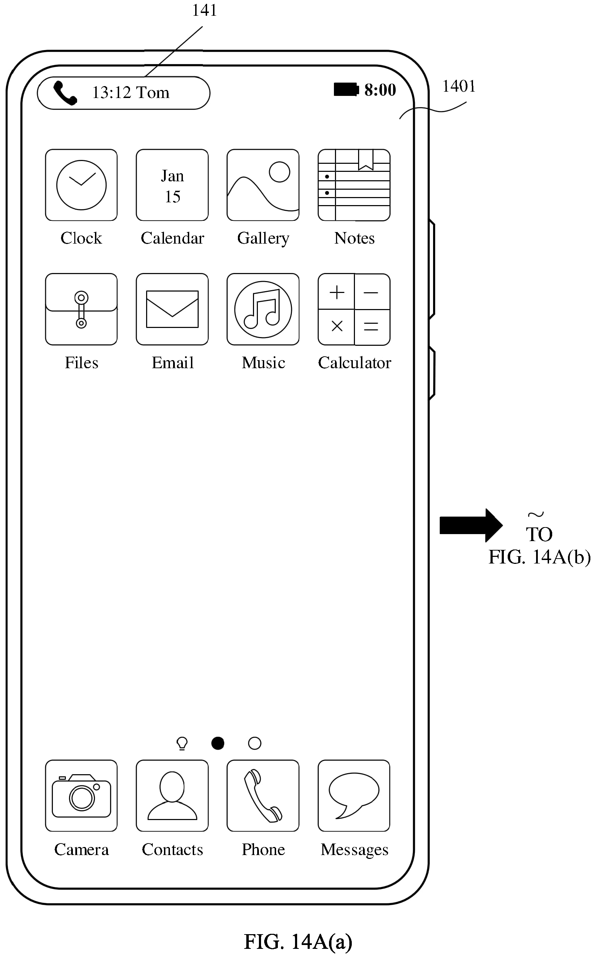

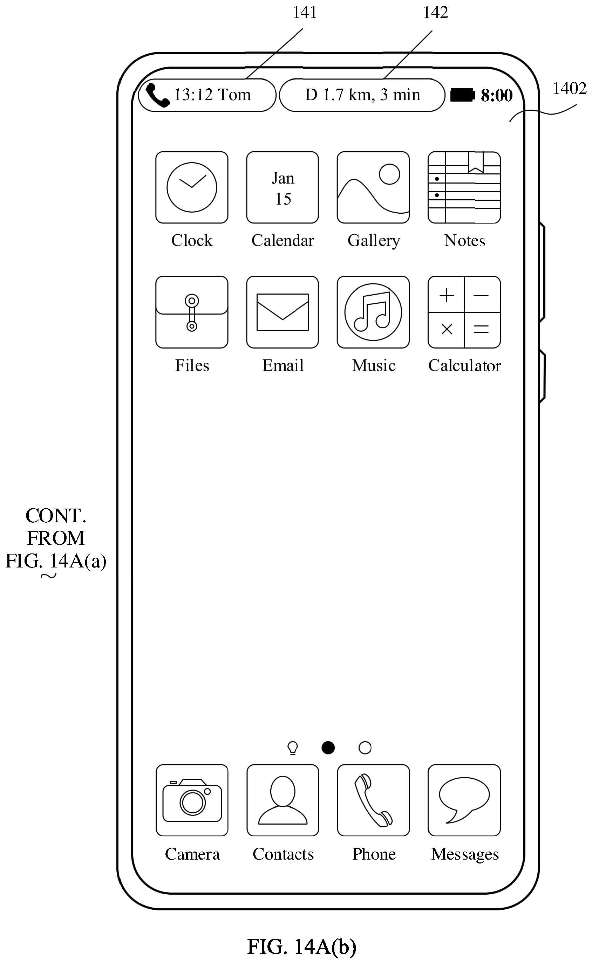

For another example, on an interface 1401 shown in FIG. 14A(a), the electronic device receives a ride hailing notification in a process of displaying a call capsule notification 141 in a status bar in the tiled manner by using the extended capsule, and the electronic device determines that the ride hailing notification includes a plurality of segments of information. If the electronic device determines that the remaining display space meets a tiled display requirement of the extended capsule required by the plurality of segments of information, on an interface 1402 shown in FIG. 14A(b), the electronic device may display a ride hailing capsule notification 142 in the tiled manner, and the ride hailing capsule notification 142 is the extended capsule.

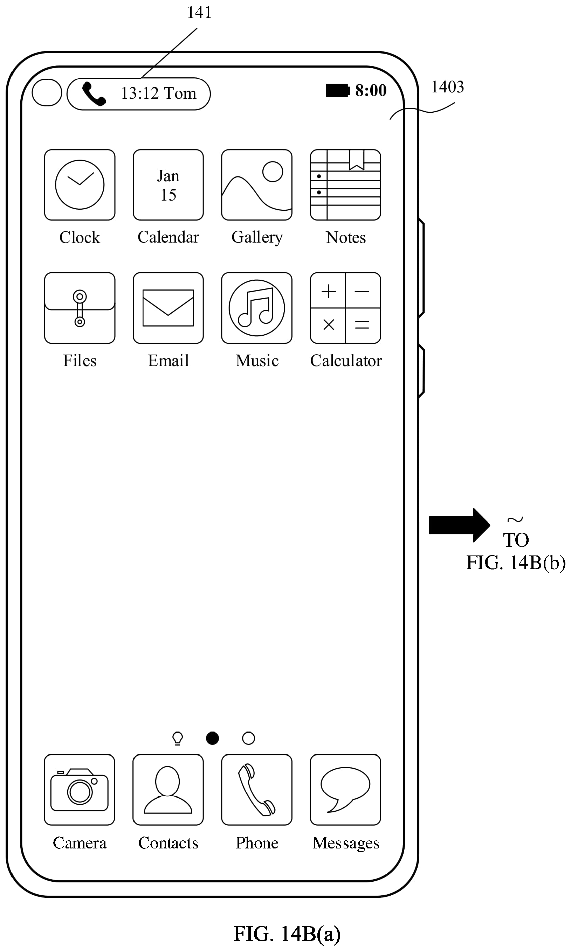

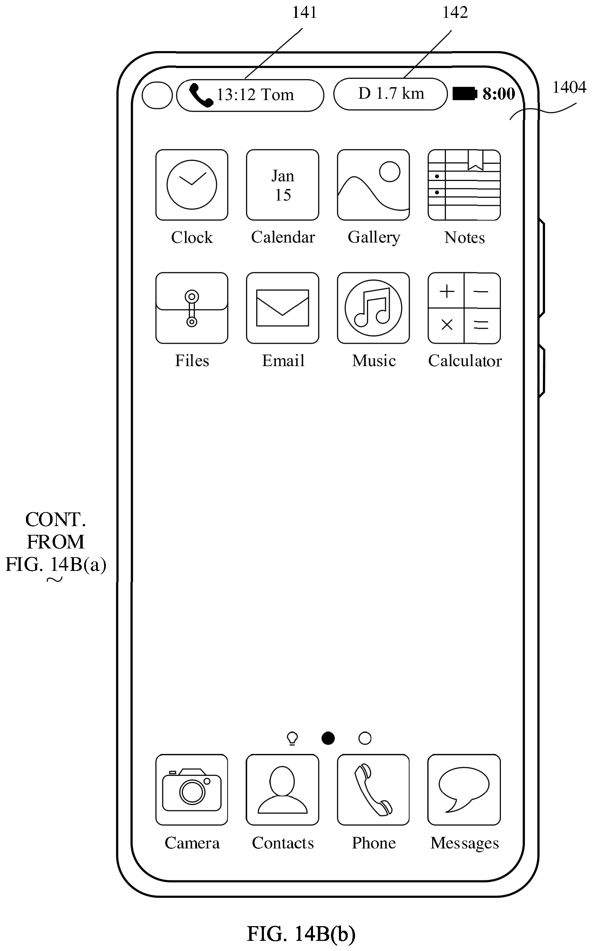

Alternatively, on an interface 1403 shown in FIG. 14B(a), the electronic device receives a ride hailing notification in a process of displaying a call capsule notification 141 in a status bar in the tiled manner by using the extended capsule, and the electronic device determines that the ride hailing notification includes a plurality of segments of information. Because a camera hole of the electronic device occupies some top space of the display, the remaining display space in the status bar can meet only the tiled display requirement of the common capsule. In this case, on an interface 1404 shown in FIG. 14B(b), because a priority of the ride hailing notification is lower than a priority of the call notification, the electronic device retains the call capsule notification 141 to display an extended capsule in the tiled manner, and displays the ride hailing capsule notification 142 in the tiled manner by using the common capsule.

In this way, the electronic device implements, based on a quantity of segments of information included in notifications, the remaining display space, and priorities of the notifications, more comprehensive, more universal, more convenient, and more lightweight adaptive display of a plurality of capsule notifications.

In some embodiments, in a process of displaying a notification, the electronic device may display detailed content of the notification in response to an operation of a user in a display area of the notification. In addition, in a process of viewing the detailed content of the notification, running of a current task of the electronic device is not interrupted.

Optionally, in the two scenarios of displaying the capsule notification in the tiled manner and displaying the capsule notification in the stacked (or folded) manner, implementations of displaying detailed content of the notification are different in response to the operation of the user in the display area of the notification. The following separately describes the two scenarios.

In some examples, the electronic device displays the capsule notification in the tiled manner, and in response to an operation of the user on the capsule notification, the electronic device displays a function page corresponding to the capsule notification. The function page is used to display the detailed content of the capsule notification. Optionally, the function page is, for example, a card.

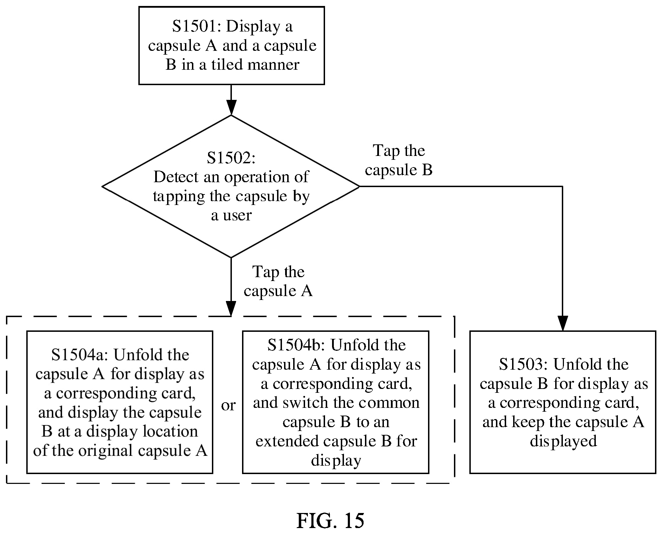

FIG. 15 is a schematic flowchart of another notification display method according to an embodiment of this application. It should be noted that the method is not limited to a specific sequence described in FIG. 15 and below. It should be understood that in another embodiment, a sequence of some steps in the method may be exchanged based on an actual requirement, or some steps in the method may be omitted or deleted. The method includes the following steps.

S1501: An electronic device displays a capsule A and a capsule B in a tiled manner.

Remaining space in a status bar of the electronic device meets a tiled display requirement of one or more existing capsule notifications, and the electronic device may display the one or more capsule notifications in the tiled manner.

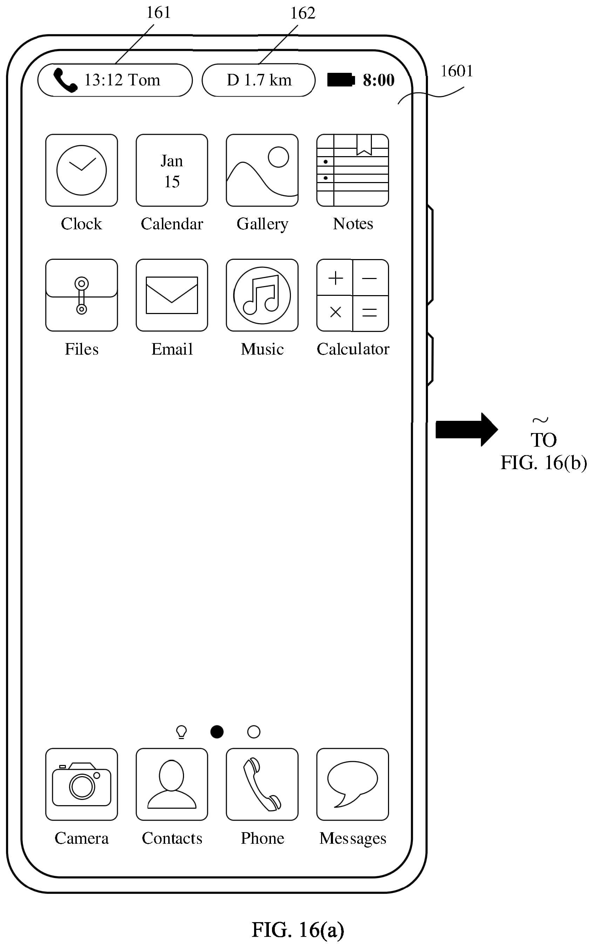

For example, on an interface 1601 shown in FIG. 16(a), the electronic device displays a call capsule notification 161 and a ride hailing capsule notification 162 in the tiled manner.

In some examples, priorities of the plurality of capsule notifications displayed by the electronic device in the tiled manner are different. For example, a priority of the call capsule notification 161 is higher than a priority of the ride hailing capsule notification 162.

S1502: The electronic device detects an operation of tapping the capsule by a user. If an operation of tapping the capsule B by the user is detected, step S1503 is performed; or if an operation of tapping the capsule A by the user is detected, step S1504a or S1504b is performed.

In some embodiments, in a process in which the electronic device displays the capsule notification in the tiled manner, the electronic device detects an operation of the user on a capsule notification, and may determine that the user indicates to display detailed content corresponding to the capsule notification. For example, the electronic device may display a corresponding function page (for example, a card), or display a corresponding page after an application is started.

In some examples, displayed content on the capsule further includes a preset control, and the preset control indicates the electronic device to execute a corresponding response event. For example, an end control is displayed on a call notification capsule. In response to an operation of the user on the end control, the electronic device may hang up an ongoing call corresponding to the current call notification capsule.

In some examples, when detecting an operation of tapping an area outside the preset control on the capsule by the user, the electronic device may display corresponding detailed content.

In some embodiments, the electronic device displays a plurality of capsule notifications based on preset priorities. In this case, after detecting an operation of the user on a capsule notification with a lowest priority, the electronic device may display detailed content corresponding to the capsule notification with the lowest priority, that is, perform step S1503. After detecting an operation of the user on a capsule notification with a higher priority, the electronic device needs to display detailed content corresponding to the capsule notification with the higher priority, and adjust a display sequence of remaining capsule notifications, that is, perform step S1504a or S1504b.

In some examples, the following describes a process of displaying the detailed content corresponding to the capsule by using an example in which a priority of the capsule A is higher than a priority of the capsule B.

S1503: The electronic device unfolds the capsule B for display as a corresponding card, and keeps the capsule A displayed.

In some embodiments, in the plurality of capsules displayed by the electronic device in the tiled manner, a card corresponding to a capsule with a lowest priority is unfolded for display, and display of another capsule is not affected. Therefore, in response to an operation of the user on the capsule B with the low priority in the capsule A and the capsule B that are currently displayed in the tiled manner, the electronic device unfolds the capsule B for display as a corresponding card, and keeps the capsule A displayed.

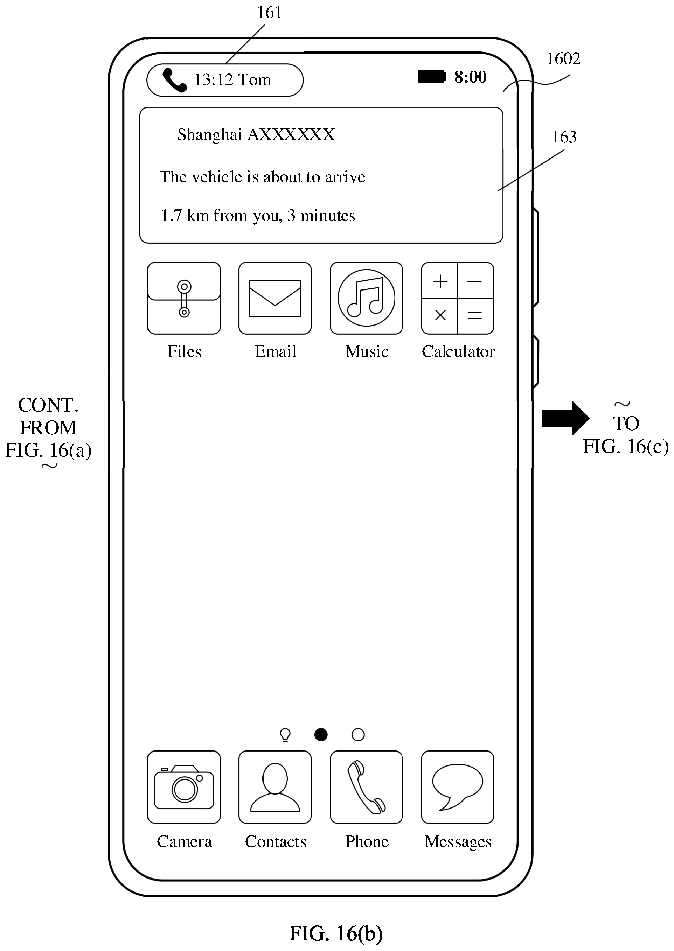

For example, on the interface 1601 shown in FIG. 16(a), in response to a tap operation of the user on the ride hailing capsule notification 162 that ranks low, for example, on an interface 1602 shown in FIG. 16(b), the electronic device displays a ride hailing card 163 corresponding to the ride hailing capsule notification 162. In addition, the electronic device keeps the call capsule notification 161 displayed, and no longer displays the ride hailing capsule notification 162.

In some other embodiments, in response to an operation of the user on the capsule B with the low priority in the capsule A and the capsule B that are currently displayed in the tiled manner, the electronic device unfolds the capsule B for display as a corresponding card, and the remaining display space in the status bar increases. In this case, the electronic device may further determine a display manner of the capsule A. If the capsule A is displayed as an extended capsule in the tiled manner, the electronic device keeps the capsule A displayed. If the capsule A is displayed as a common capsule in the tiled manner, and a notification corresponding to the capsule A includes a plurality of segments of messages, the electronic device may determine whether the remaining display space in the status bar meets a tiled display requirement of the extended capsule of the capsule A. When the remaining display space in the status bar meets the tiled display requirement of the extended capsule of the capsule A, the electronic device may switch the capsule A from being originally displayed as the common capsule in the tiled manner to being displayed in the extended capsule in the tiled manner.

In some examples, when there are a plurality of capsules A, the electronic device may sequentially determine, based on priorities of the plurality of capsules, whether the remaining display space in the status bar meets a capsule switching display manner.

In this way, in response to an operation of the user on a capsule with a low priority, the electronic device may display detailed content corresponding to the capsule, so that the user learns more information of a live notification.

It should be understood that the electronic device displays, in a card manner, detailed notification content corresponding to the capsule, or may display, in another manner, detailed notification content corresponding to the capsule, for example, display an application interface. Details are not described below.

S1504a: The electronic device unfolds the capsule A for display as a corresponding card, and displays the capsule B at a display location of the original capsule A.

In some embodiments, the electronic device may unfold, for display, the card corresponding to the capsule A in response to an operation of the user on the capsule A with a higher priority. In addition, because the capsule A is no longer displayed, and the display location of the original capsule A is idle, the electronic device may display the capsule B with the lower priority at the display location of the original capsule A.

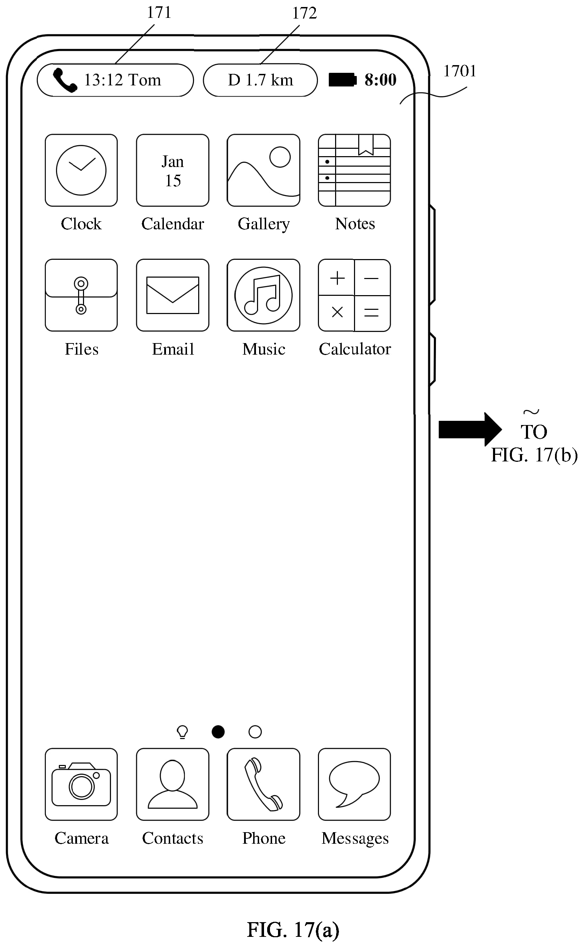

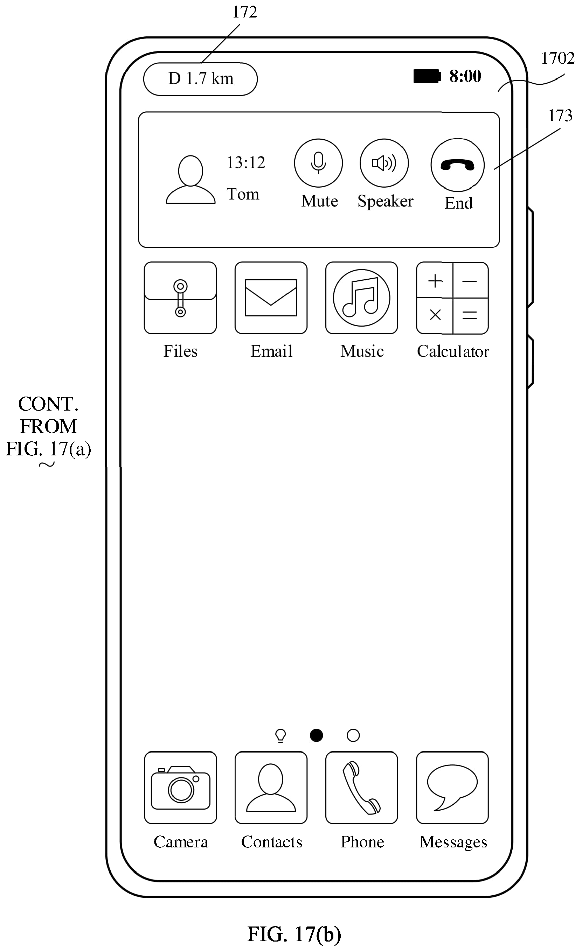

For example, on an interface 1701 shown in FIG. 17(a), the electronic device displays a call capsule notification 171 and a ride hailing capsule notification 172 in the tiled manner. On an interface 1702 shown in FIG. 17(b), the electronic device unfolds, for display, a call card 173 corresponding to the call capsule notification 171, and prioritizes the ride hailing capsule notification 172 to a location with a higher display priority for display.

It should be understood that after the electronic device unfolds, for display, in response to the operation of the user on the capsule, a card corresponding to the capsule, a display location of another capsule whose priority is lower than that of the capsule may be adaptively adjusted, that is, there is at least one capsule B.

In this way, in response to the operation of the user on the capsule, the electronic device can present the more information of the live notification to the user, and can adaptively adjust display locations of different capsules, to achieve better display effect.

S1504b: The electronic device unfolds the capsule A for display as the corresponding card, and switches the common capsule B to an extended capsule B for display.

In some embodiments, the electronic device may unfold, for display, the card corresponding to the capsule A in response to the operation of the user on the capsule A with the higher priority. In addition, because the capsule A is no longer displayed, and the display location of the original capsule A is idle, the electronic device may display the capsule B with the lower priority at the display location of the original capsule A.

In some examples, in a process of adjusting a display location of the capsule B, the electronic device may further determine whether a notification corresponding to the capsule B includes a plurality of segments of messages, and whether the remaining display space in the status bar meets the display of the extended capsule in the tiled manner after the capsule A is no longer displayed. If the notification corresponding to the capsule B includes the plurality of segments of messages, and the remaining display space in the status bar meets the display of the extended capsule in the tiled manner, the electronic device may switch from the common capsule B to the extended capsule B for display.

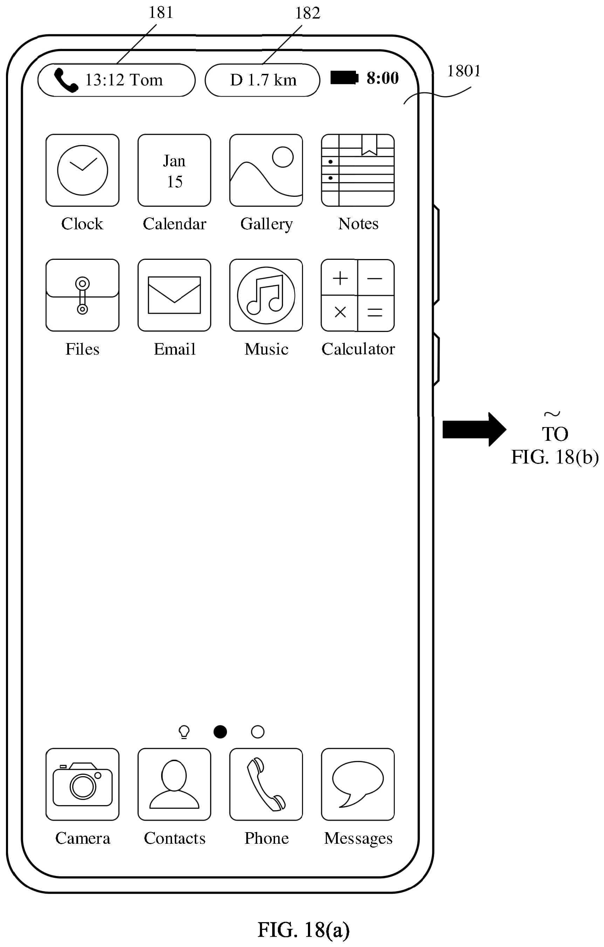

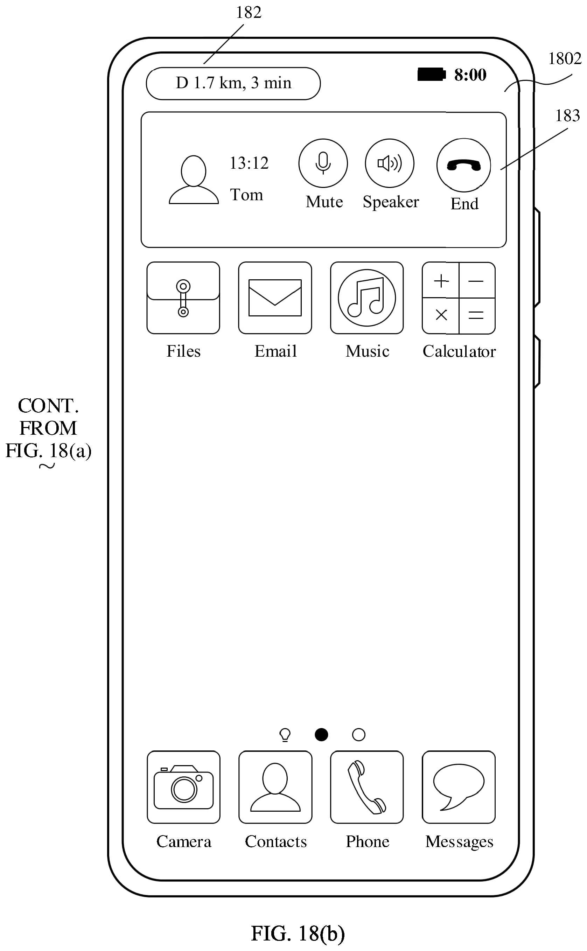

For example, on an interface 1801 shown in FIG. 18(a), the electronic device displays a call capsule notification 181 and a ride hailing capsule notification 182 in the tiled manner. On an interface 1802 shown in FIG. 18(b), the electronic device unfolds, for display, a call card 183 corresponding to the call capsule notification 181, prioritizes the ride hailing capsule notification 182 displayed as the common capsule in the tiled manner to a location with a higher display priority, and displays the ride hailing capsule notification 182 in a tiled and extended capsule display manner.

It should be understood that after the electronic device unfolds, for display, in response to the operation of the user on the capsule, the card corresponding to the capsule, a display manner of the another capsule whose priority is lower than that of the capsule may be adaptively adjusted, that is, there is the at least one capsule B.

In this way, in response to the operation of the user on the capsule, the electronic device can present the more information of the live notification to the user, and can adaptively adjust display manners and the display locations of the different capsules, to achieve better display effect.

In some embodiments, the foregoing use an example of the two capsules A and B displayed in the tiled manner to describe a process of unfolding the capsules to display the cards. In some examples, the electronic device displays one capsule in the tiled manner. In this case, in response to an operation of the user on the capsule, the electronic device displays a card corresponding to the capsule, and no longer displays the capsule. In some examples, the electronic device displays more than two capsules in the tiled manner. After unfolding, for display, a card corresponding to any one of the capsules in response to an operation of the user on the capsule, the electronic device adjusts display locations and/or display manners based on priorities of remaining capsules. For a specific process, refer to the foregoing example.

In some embodiments, if the electronic device does not detect, within preset time after unfolding, for display, the card corresponding to the capsule, the operation of the user on the card, the electronic device may cancel display of the card, and restore display of the original capsule. Alternatively, after unfolding, for display, the card corresponding to the capsule, the electronic device detects an operation of tapping a display area outside the card by the user (for example, an operation of tapping a blank display area outside the card), and may cancel display of the card, and restore display of the original capsule.

For example, on an interface 1602 shown in FIG. 16(b), the electronic device detects no operation of the user on the ride hailing card 163 within preset time after displaying the ride hailing card 163. In this case, the electronic device may no longer display the ride hailing card 163, but display the ride hailing capsule 162 on the interface 1601 shown in FIG. 16(a). The electronic device may determine a display location and a display manner of the restored ride hailing capsule 162 based on another currently displayed capsule and a priority relationship.

In some embodiments, in a process of unfolding, for display, the card corresponding to the capsule A, the electronic device detects the operation of the user on the capsule B, and may unfold, for display, the card corresponding to the capsule B, and restore display of the capsule A.

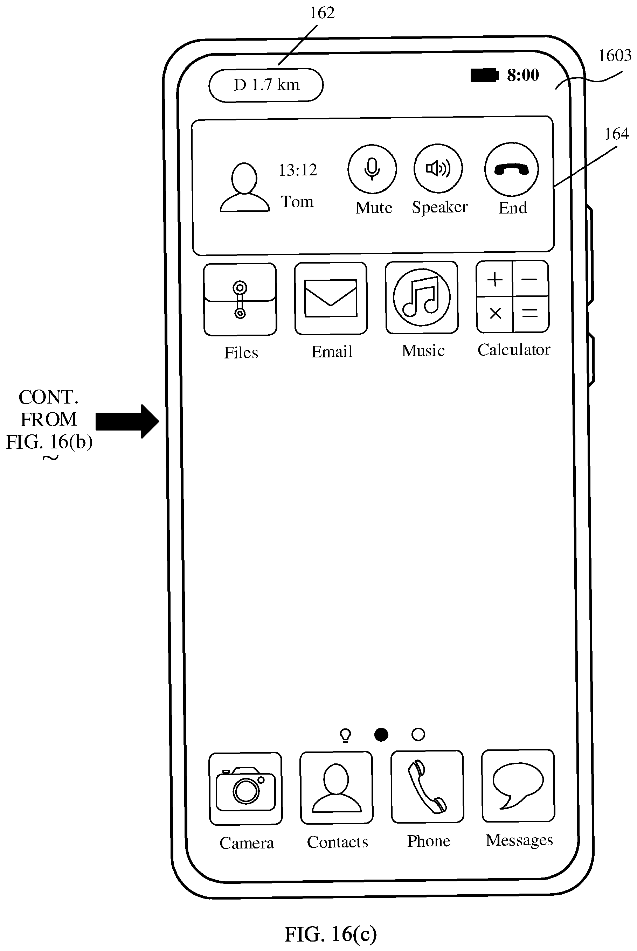

For example, on the interface 1602 shown in FIG. 16(b), the electronic device displays the ride hailing card 163 in response to an operation of the user on the ride hailing capsule notification 162. The electronic device detects an operation of the user on the call capsule notification 161. For example, on an interface 1603 shown in FIG. 16(c), the electronic device displays a call card 164, and no longer displays the ride hailing card 163, but restores display of the ride hailing capsule notification 162 in the status bar. Optionally, the ride hailing capsule notification 162 whose display is restored is displayed at a location with a highest priority in the status bar based on the priorities of the remaining capsule notifications.

In this way, the user may select, based on a requirement, details of a to-be-viewed capsule notification. In addition, for details of a capsule notification that the user has viewed or is not interested in, the electronic device may further automatically restore display of the capsule notification, thereby simplifying a user operation.

In some examples, after displaying a card of the capsule notification, in response to an operation of the user on another capsule notification, the electronic device may no longer display the card, and no longer display the capsule notification corresponding to the card.

In some examples, after displaying a card of the capsule notification, the electronic device may alternatively display a plurality of cards in response to an operation of the user on another capsule notification.

In some embodiments, as described in step S805, when the display space is not enough, the electronic device may display the notification of the event A in a stacked or folded manner. The following describes in detail a process of displaying a capsule in a stacked or folded manner.

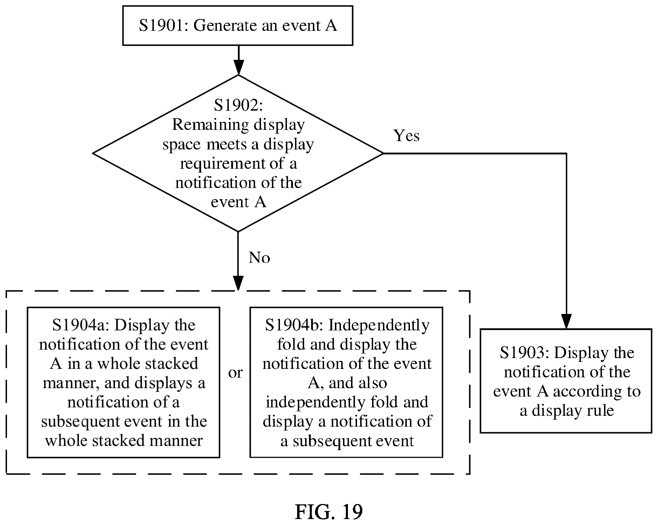

FIG. 19 is a schematic flowchart of another notification display method according to an embodiment of this application. It should be noted that the method is not limited to a specific sequence described in FIG. 19 and below. It should be understood that in another embodiment, a sequence of some steps in the method may be exchanged based on an actual requirement, or some steps in the method may be omitted or deleted. The method includes the following steps.

S1901: An electronic device generates an event A.

S1902: The electronic device determines whether remaining display space meets a display requirement of a notification of the event A; and if yes, performs step S1903; or if no, performs step S1904a or S1904b.

S1903: The electronic device displays the notification of the event A according to a display rule.

S1904a: The electronic device displays the notification of the event A in a whole stacked manner, and displays a notification of a subsequent event in the whole stacked manner.

S1904b: The electronic device independently folds and displays the notification of the event A, and also independently folds and displays the notification of the subsequent event.

In some embodiments, after generating the event A, the electronic device determines whether the remaining display space in a status bar meets the display requirement of the notification of the event A. If the remaining display space in the status bar meets the display requirement of the notification of the event A, the electronic device may display the notification of the event A based on the process of determining the display manner according to the display rule in step S801 to step S810, that is, perform step S1903. If the remaining display space in the status bar does not meet the display requirement of the notification of the event A, the electronic device displays the notification of the event A in the whole stacked manner or the independently folded manner according to a display rule preconfigured by a system or set by a user. Optionally, when display of a plurality of capsules that are currently displayed in the whole stacked manner or independently folded manner does not end, the notification of the subsequent event is also displayed in the same whole stacked or independently folded manner.

In some examples, stacked display may also be described as whole stacked display or the like. When the capsules are displayed in the stacked manner, only a capsule with a highest priority can be completely displayed, and remaining capsules cover a part or all of other capsules, or are partially or completely covered by other capsules.

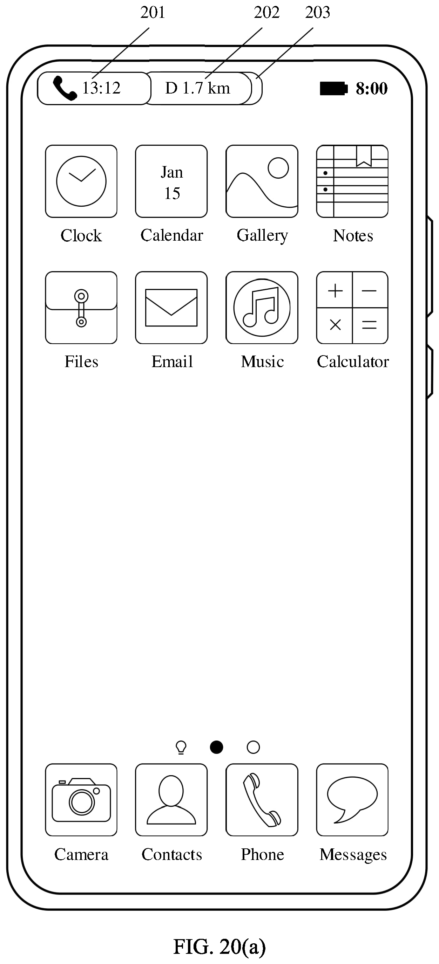

For example, as shown in FIG. 20(a), the electronic device displays a plurality of capsules in the whole stacked manner, for example, a call capsule notification 201 with a highest priority that can be completely displayed, and a displayed ride hailing capsule notification 202 that is partially covered. In addition, as shown in a reference numeral 203, the ride hailing capsule notification 202 further includes at least one capsule with more content covered.

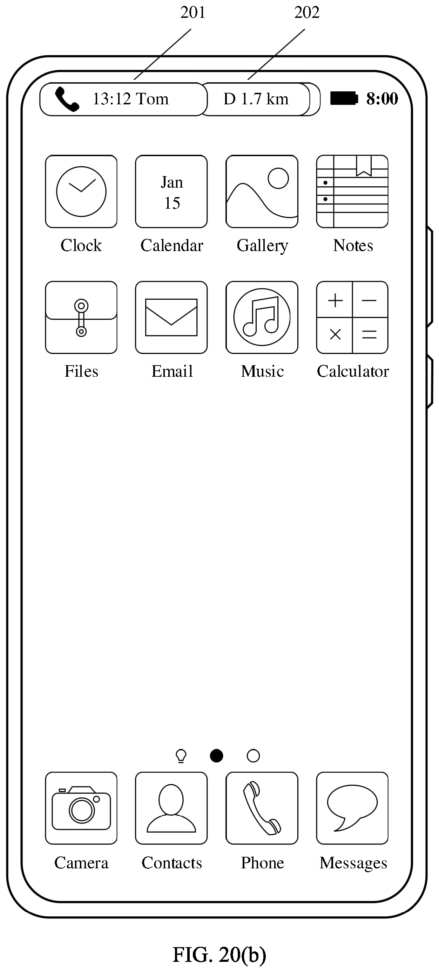

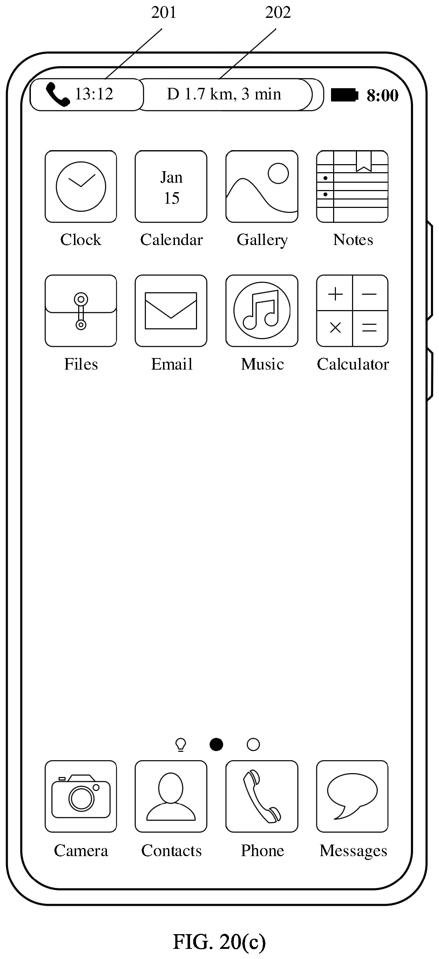

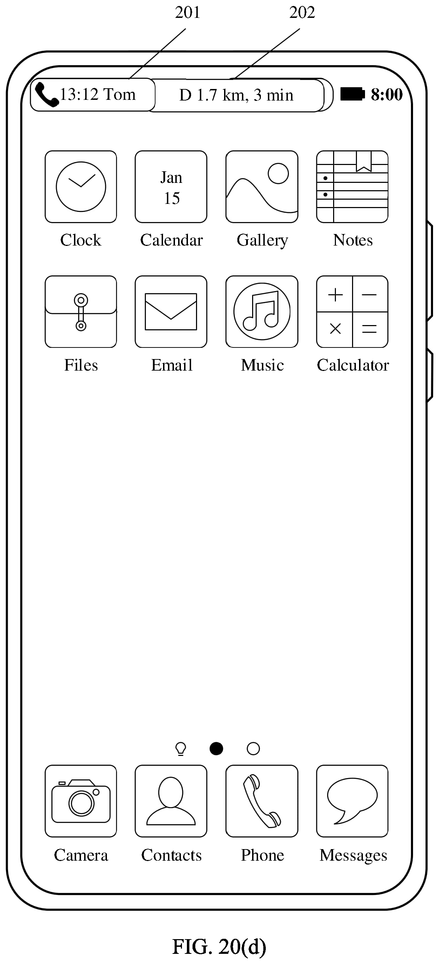

Optionally, the electronic device displays, in a common capsule manner or an extended capsule manner, a plurality of whole stacked capsules based on a size of the remaining display space in the status bar and a quantity of segments of messages included in the notification. For example, as shown in FIG. 20(a), the electronic device displays the call capsule notification 201 and the ride hailing capsule notification 202 in the common capsule manner. For another example, as shown in FIG. 20(b), the electronic device displays the call capsule notification 201 in the extended capsule manner, and displays the ride hailing capsule notification 202 in the common capsule manner. For another example, as shown in FIG. 20(c), the electronic device displays the call capsule notification 201 in the common capsule manner, and displays the ride hailing capsule notification 202 in the extended capsule manner. For another example, as shown in FIG. 20(d), the electronic device displays the call capsule notification 201 and the ride hailing capsule notification 202 in the extended capsule manner.

In this way, when the display space in the status bar is not enough, the electronic device may display the plurality of capsule notifications in the stacked manner. In addition, the electronic device may adaptively adjust display lengths of the capsules, to enrich display effect.

In some other examples, folded display may alternatively be described as independently folded display or the like. When the capsules are displayed in the folded manner, all of the capsules are not covered, or all of the capsules are covered.

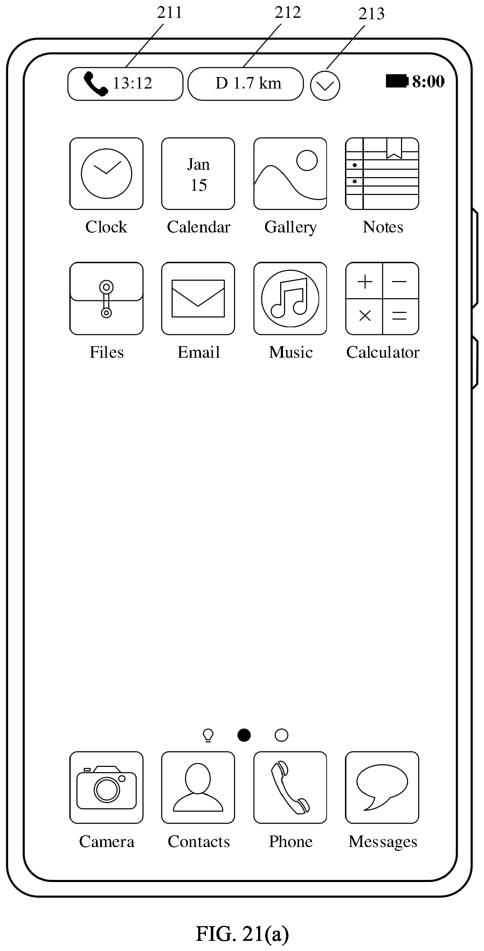

For example, as shown in FIG. 21(a), the electronic device displays the plurality of capsules in the independently folded manner. The electronic device completely displays at least one capsule based on a size of the remaining display space, for example, the electronic device independently and completely displays a call capsule notification 211 and a ride hailing capsule notification 212. In addition, the electronic device further displays a folding control 213. The folding control 213 is used to unfold, for display, detailed content corresponding to a folded capsule or all capsules (for example, display the detailed content in a card manner).

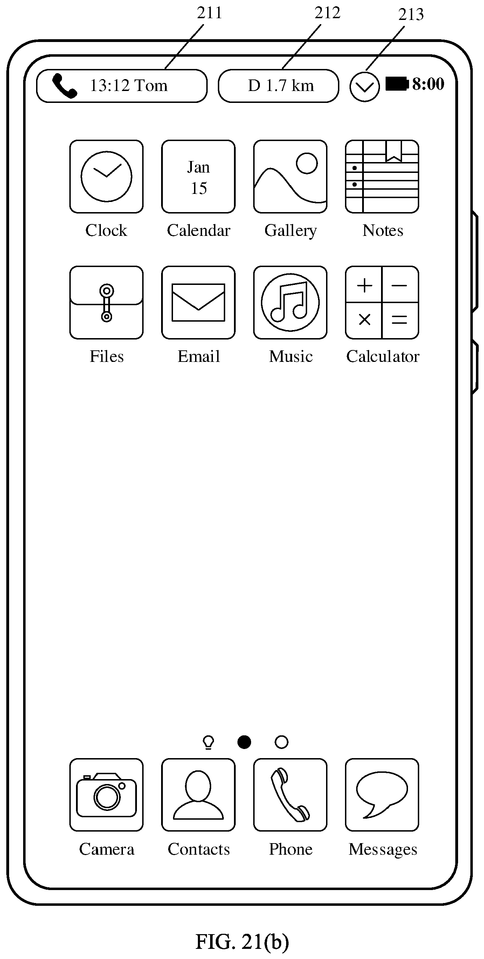

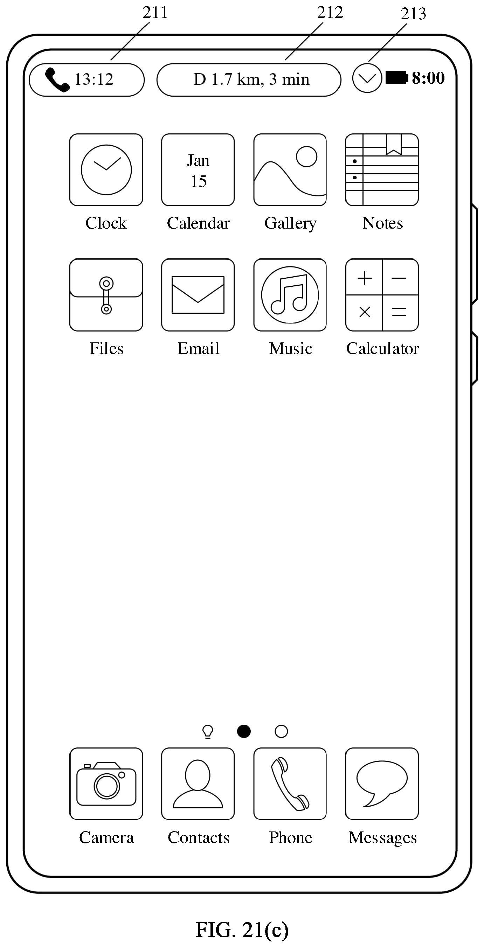

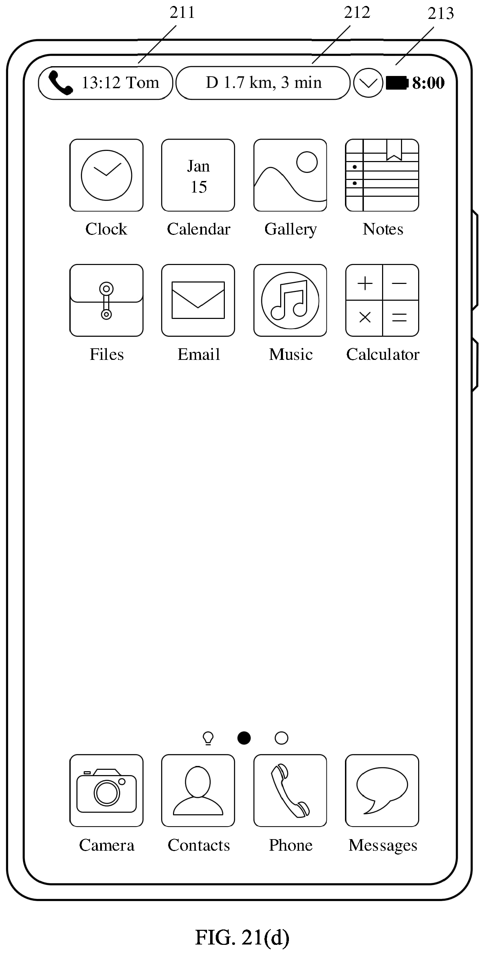

Optionally, the electronic device displays, in the common capsule manner or the extended capsule manner, a plurality of independently folded capsules based on the size of the remaining display space in the status bar and a quantity of segments of messages included in the notification. For example, as shown in FIG. 21(a), the electronic device displays the call capsule notification 211 and the ride hailing capsule notification 212 in the common capsule manner. For another example, as shown in FIG. 21(b), the electronic device displays the call capsule notification 211 in the extended capsule manner, and displays the ride hailing capsule notification 212 in the common capsule manner. For another example, as shown in FIG. 21(c), the electronic device displays the call capsule notification 211 in the common capsule manner, and displays the ride hailing capsule notification 212 in the extended capsule manner. For another example, as shown in FIG. 21(d), the electronic device displays the call capsule notification 211 and the ride hailing capsule notification 212 in the extended capsule manner.

In this way, when the display space in the status bar is not enough, the electronic device may display the plurality of capsule notifications in the folded manner. In addition, the electronic device may adaptively adjust display lengths of the capsules, to enrich display effect.

In some embodiments, in a process of displaying the plurality of capsules in the stacked or folded manner, the electronic device may also display corresponding detailed content in response to an operation of the user on the capsules.

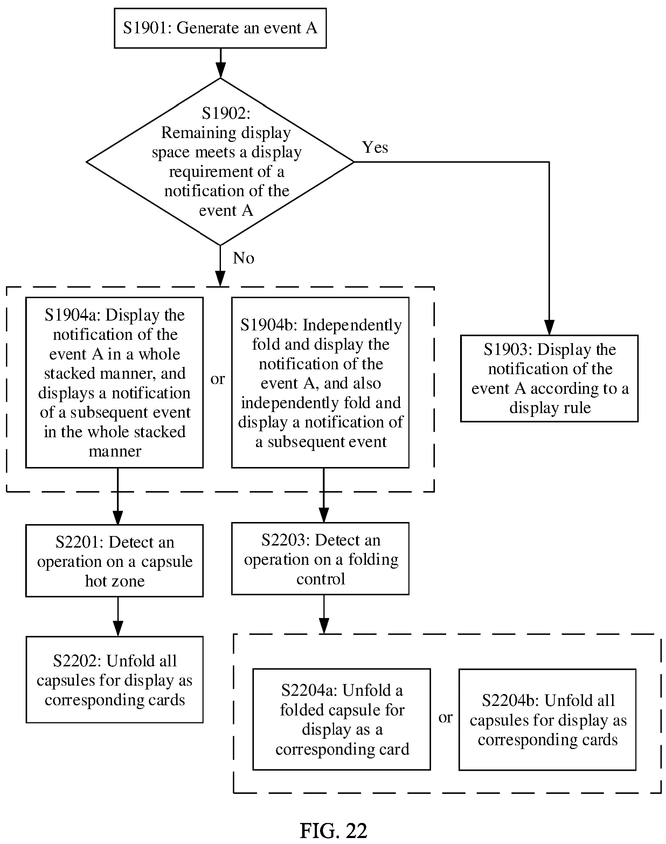

For example, as shown in FIG. 22, after step S1904a, step S2201 and step S2202 are further included.

S2201: The electronic device detects an operation on a capsule hot zone.

S2202: The electronic device unfolds all the capsules for display as corresponding cards.

In some examples, when the capsules are displayed in the stacked manner, display areas of different capsules form a capsule hot zone. In response to an operation of the user on any location on the capsule hot zone, the electronic device may unfold, for display, function pages corresponding to all the capsules.

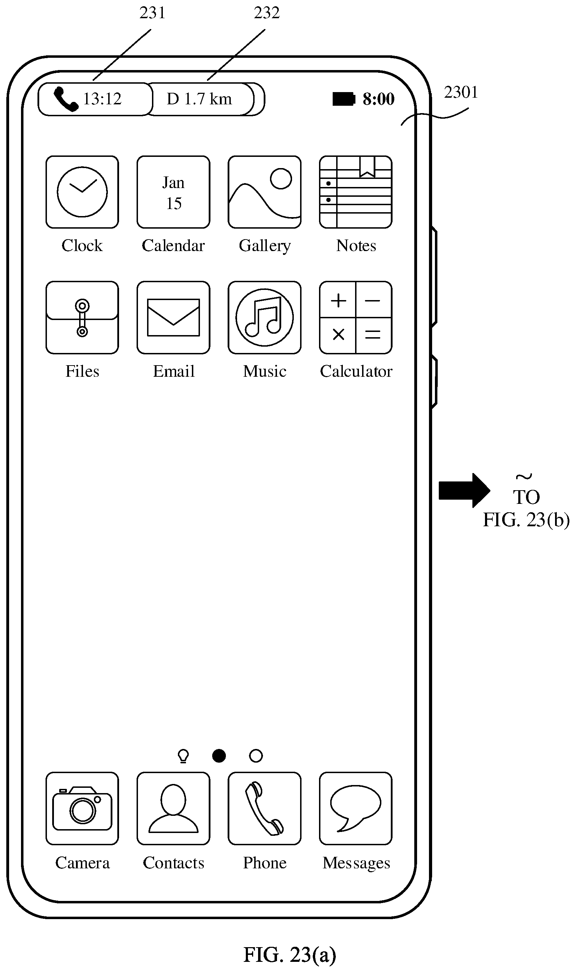

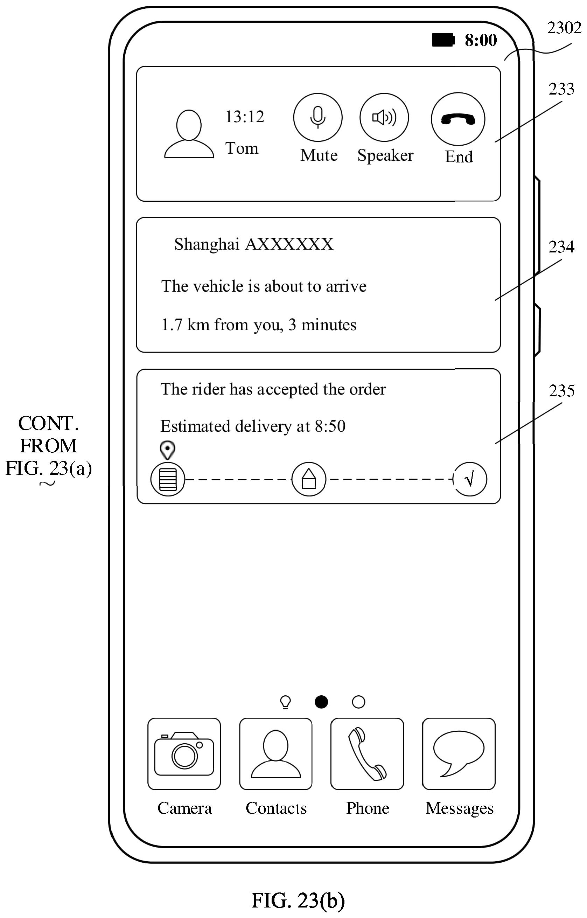

For example, on an interface 2301 shown in FIG. 23(a), the electronic device displays a call capsule notification 231, a ride hailing capsule notification 232, and another covered capsule in the stacked manner, and the capsule hot zone includes display areas of these capsules. For example, on an interface 2302 shown in FIG. 23(b), in response to the operation of the user on the capsule hot zone, the electronic device unfolds cards corresponding to all the stacked capsules, for example, displays a call card 233 corresponding to the call capsule notification 231, a ride hailing card 234 corresponding to the ride hailing capsule notification 232, and a takeout card 235 corresponding to a covered takeout capsule notification.

Optionally, the electronic device displays the cards based on priorities of the notifications.

Optionally, when there are a large quantity of stacked capsules, a display of the electronic device cannot display cards corresponding to all the capsules. In this case, the electronic device displays cards corresponding to some capsules, and may display some hidden cards in response to a sliding operation of the user on the display.

In this way, when the capsules are displayed in the stacked manner, the electronic device may also unfold, for display, detailed content of a notification corresponding to the capsule in response to a user operation, to help the user learn more notification information. In addition, it is convenient for the user to browse and select the notifications.

For another example, as shown in FIG. 22, after step S1904b, step S2203 and step S2204a (or S2204b) are further included.

S2203: The electronic device detects an operation on a folding control.

S2204a: The electronic device unfolds a folded capsule for display as a corresponding card. Alternatively, S2204b: The electronic device unfolds all the capsules for display as corresponding cards.

In some examples, when the capsule is displayed in the folded manner, the electronic device displays the folding control. The folding control is used to unfold detailed content corresponding to the folded capsule, or is used to unfold detailed content corresponding to all the capsules. Optionally, the folding control may be displayed as a folding arrow, a folded service icon, or the like.

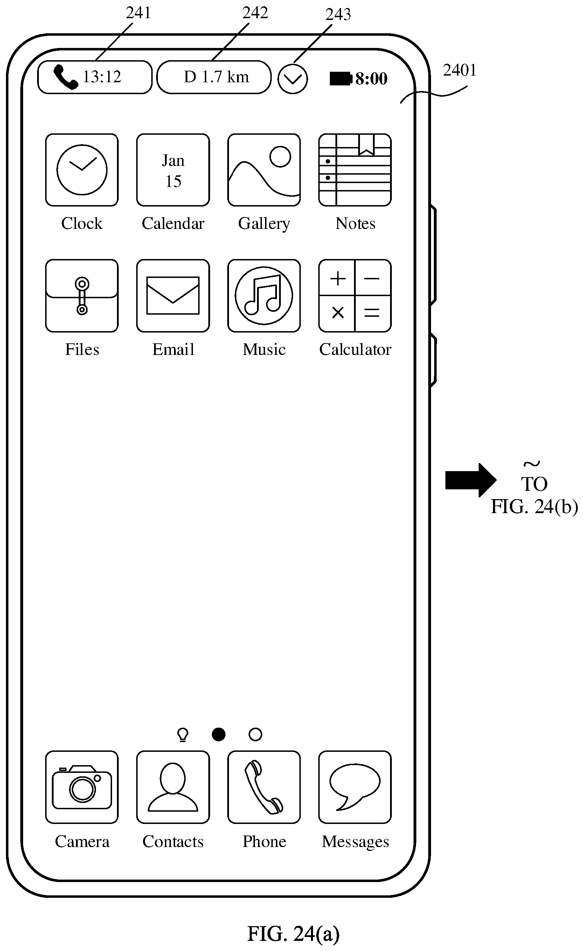

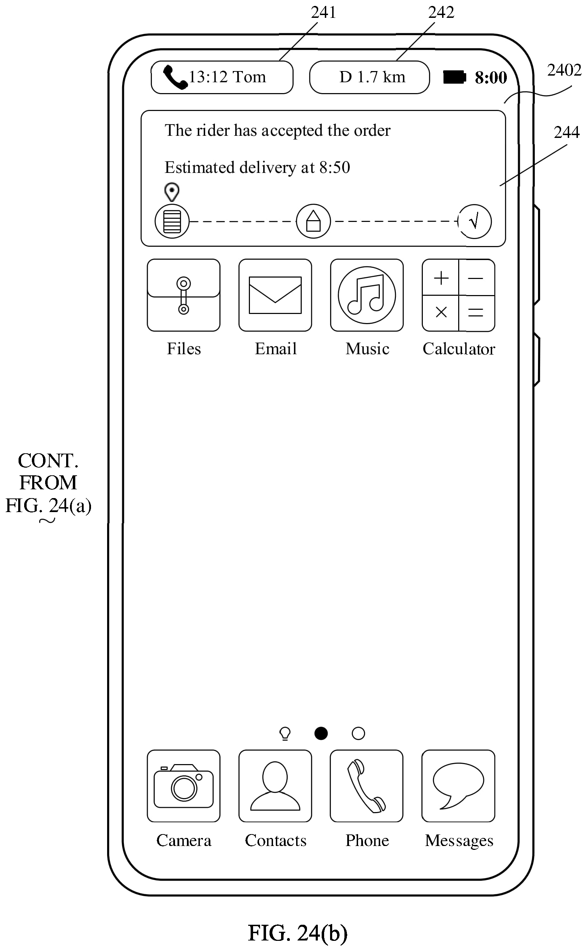

For example, on an interface 2401 shown in FIG. 24(a), the electronic device displays a call capsule notification 241 and a ride hailing capsule notification 242 in the folded manner, and displays a folding control 243. In response to an operation of the user on the folding control 243, for example, on an interface 2402 shown in FIG. 24(b), the electronic device displays a takeout card 244 corresponding to a folded takeout capsule notification.

Optionally, when there is one folded capsule notification, in response to the operation of the user on the folding control, the electronic device no longer displays the folding control after displaying a card corresponding to the folded capsule notification. For example, on an interface 2402 shown in FIG. 24(b), a folded capsule includes only a takeout capsule, and the electronic device displays the call capsule notification 241 and the ride hailing capsule notification 242 in a tiled manner.

Optionally, when the electronic device no longer displays the folding control, the electronic device may determine, based on the remaining display space in the status bar and a quantity of segments of messages included in a notification corresponding to a currently displayed capsule, whether to adjust a display length of the capsule.

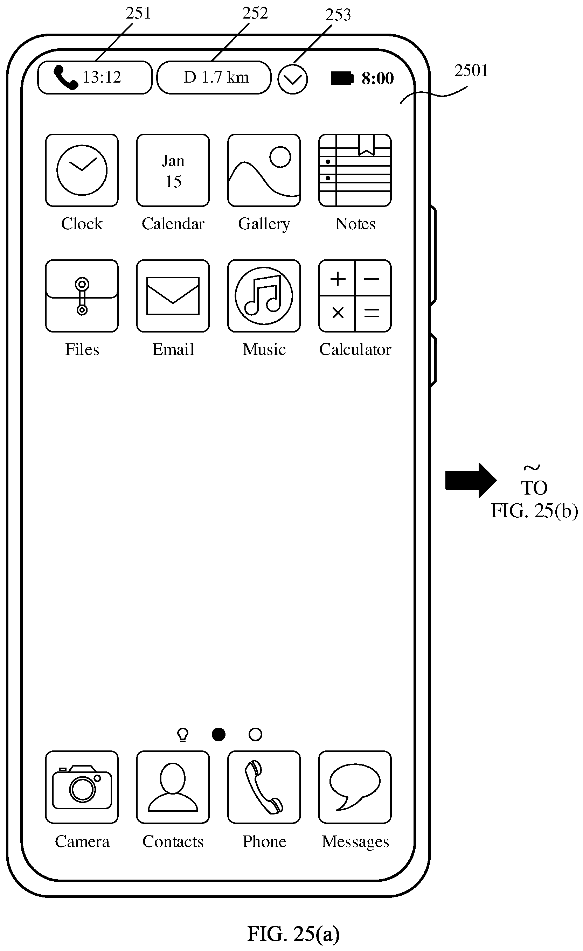

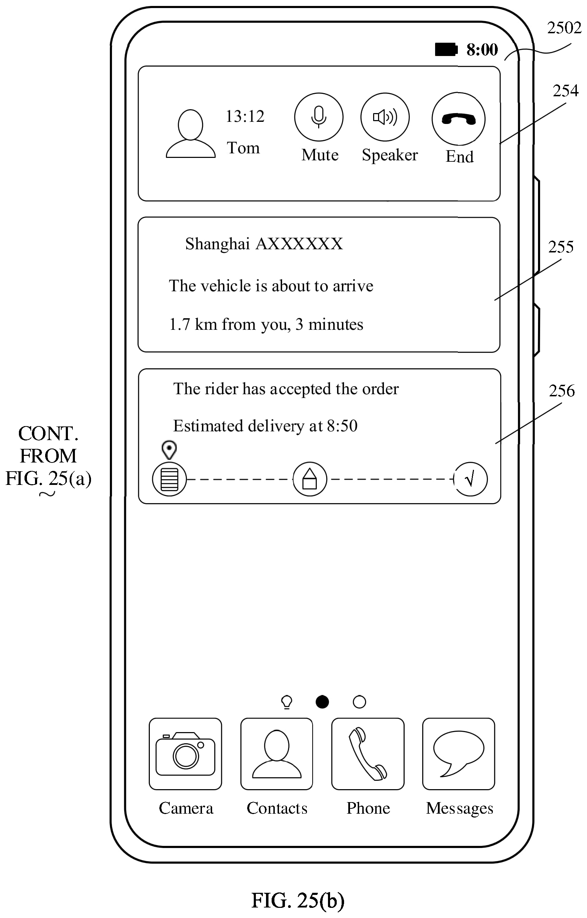

For another example, on an interface 2501 shown in FIG. 25(a), the electronic device displays a call capsule notification 251 and a ride hailing capsule notification 252 in the folded manner, and displays a folding control 253. In response to an operation of the user on the folding control 253, for example, on an interface 2502 shown in FIG. 25(b), the electronic device displays cards corresponding to all the capsules, for example, a call card 254 corresponding to the call capsule notification 251, a ride hailing card 255 corresponding to the ride hailing capsule notification 252, and a takeout card 256 corresponding to a folded takeout capsule notification.

In this way, the user can indicate, based on a requirement by tapping the capsules, the electronic device to display detailed content of the stacked or folded capsules, thereby avoiding a problem that the user cannot obtain notification content because the capsules are stacked or folded.

In some examples, when the capsules are displayed in the folded manner, different capsules that are not covered for display correspond to different capsule heat zones. In response to an operation of the user in a capsule heat zone, the electronic device may unfold, for display, a function page corresponding to a capsule in the capsule hotspot.

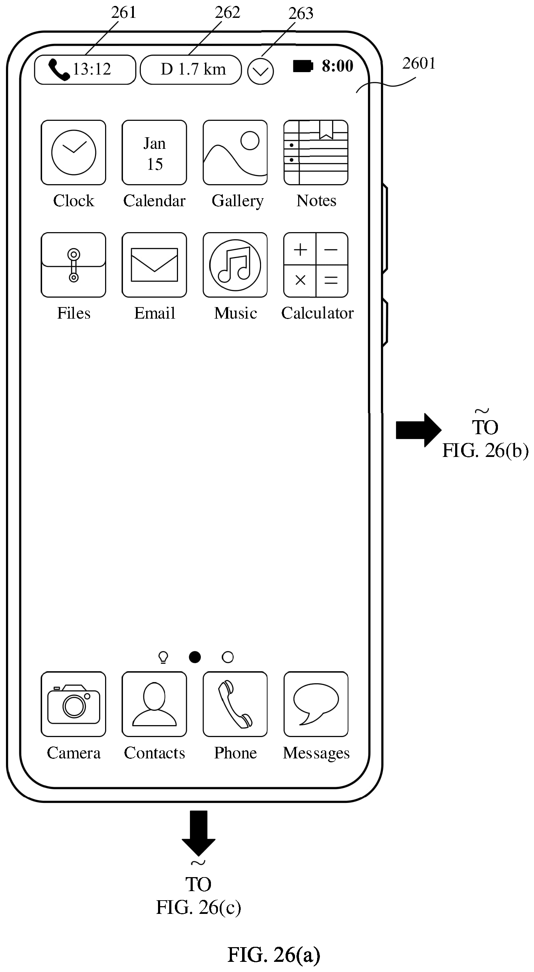

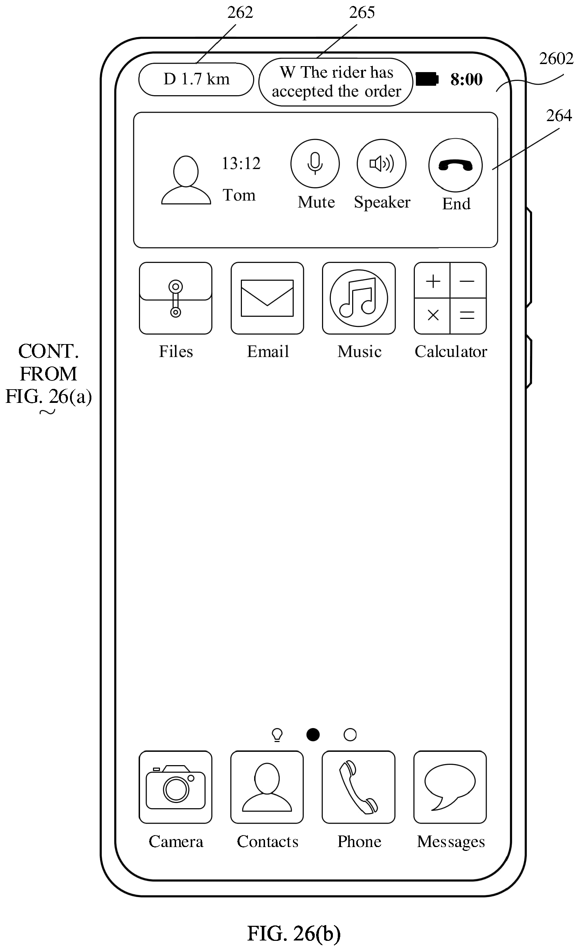

For example, on an interface 2601 shown in FIG. 26(a), the electronic device displays a call capsule notification 261 and a ride hailing capsule notification 262 in the folded manner, and displays a folding control 263. In response to a tap operation of the user on the call capsule notification 261, for example, on an interface 2602 shown in FIG. 26(b), the electronic device unfolds, for display, a call card 264 corresponding to the call capsule notification 261. In addition, because the call capsule notification 261 is no longer displayed in the status bar, the electronic device may adjust display of remaining capsules. As shown on the interface 2602, the electronic device displays the ride hailing capsule notification 262 at a display location of the original call capsule notification 261, and displays an original folded takeout capsule notification 265. Optionally, when a folded capsule is not included, the electronic device no longer displays the folding control.

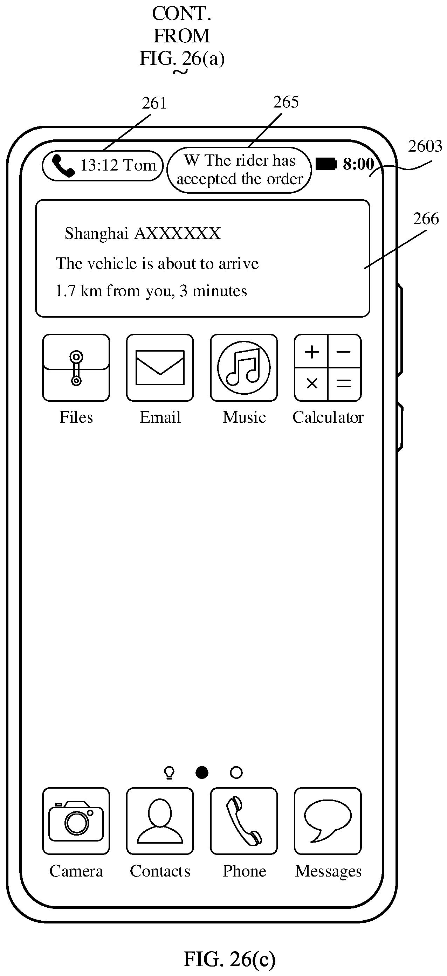

For another example, in response to a tap operation of the user on the ride hailing capsule notification 262, for example, on an interface 2603 shown in FIG. 26(c), the electronic device unfolds, for display, a ride hailing card 266 corresponding to the ride hailing capsule notification 262. In addition, because the ride hailing capsule notification 262 is no longer displayed in the status bar, the electronic device may adjust display of remaining capsules. As shown on the interface 2603, the electronic device displays the call capsule notification 261 and an original folded takeout capsule notification 265. Optionally, because the ride hailing capsule notification 262 is no longer displayed in the status bar, the remaining display space in the status bar becomes larger. The electronic device may further adjust a display length of the capsule based on a quantity of segments of messages included in a notification corresponding to the remaining capsule. As shown on the interface 2603, the electronic device adjusts the call capsule notification 261 from being originally displayed as a common capsule to being displayed as an extended capsule.

In this way, when the capsule is folded for display, the user may select, based on a requirement, a capsule whose detailed content needs to be viewed, and perform an independent operation, to meet a requirement of the user for flexibly viewing notification content.

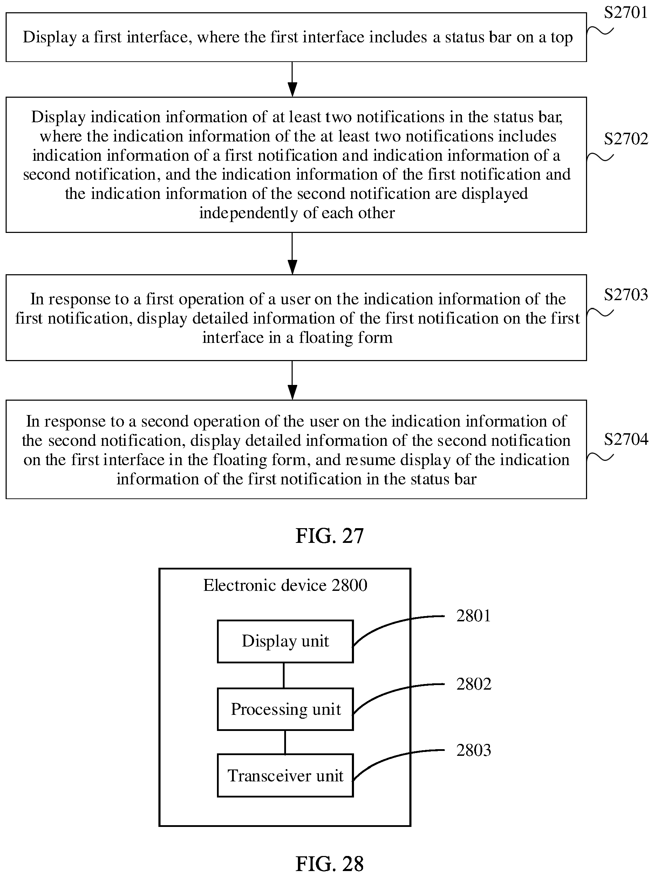

FIG. 27 is a schematic flowchart of another notification display method according to an embodiment of this application. It should be noted that the method is not limited to a specific sequence described in FIG. 27 and below. It should be understood that in another embodiment, a sequence of some steps in the method may be exchanged based on an actual requirement, or some steps in the method may be omitted or deleted. The method includes the following steps.

S2701: An electronic device displays a first interface, where the first interface includes a status bar on a top.

For example, on a first interface shown in FIG. 16(a), the first interface may be a home screen, an application interface, or the like. The top of the first interface includes the status bar. Optionally, display space in the status bar includes fixed display space and movable display space. The fixed display space is used to display preconfigured fixed content, and the movable display space is used to display configurable movable content. For example, the fixed display space is used to display a battery level, time, and the like, and the movable display space is used to display a capsule notification and the like.

S2702: The electronic device displays indication information of at least two notifications in the status bar, where the indication information of the at least two notifications includes indication information of a first notification and indication information of a second notification, and the indication information of the first notification and the indication information of the second notification are displayed independently of each other.

In some examples, both the indication information of the first notification and the indication information of the second notification are in capsule forms. Optionally, the indication information in the two capsule forms is displayed horizontally and independently or displayed vertically and independently. The independent display includes that display areas of the capsule notifications do not overlap with each other.

For example, on the interface 1601 shown in FIG. 16(a), the electronic device horizontally displays two independent capsule notifications in the status bar, for example, the call capsule notification 161 and the ride hailing capsule notification 162.

In some examples, the indication information indicates an application that sends the first notification or the second notification, and also indicates content of the first notification or content of the second notification.

For example, the indication information includes information such as an icon of the application that sends the first notification or the second notification, partial content of the first notification or partial content of the second notification, and a color (for example, a capsule color, a card color, or a text color) of the first notification or the second notification.

In this way, after receiving a live notification, the electronic device can present, in a form of a capsule notification, the live notification to a user in a timely manner in the status bar.

S2703: In response to a first operation of the user on the indication information of the first notification, the electronic device displays detailed information of the first notification on the first interface in a floating form.

In some examples, the detailed information of the notification is carried in a form of a card.

In some examples, the first operation is, for example, an operation of tapping any location in a display area of the capsule notification, or an operation of tapping a blank display area in a display area of the capsule.

For example, on the interface 1601 shown in FIG. 16(a), in response to the tap operation of the user on the ride hailing capsule notification 162, for example, on the interface 1602 shown in FIG. 16(b), the electronic device displays the ride hailing card 163 corresponding to the ride hailing capsule notification 162.

In this way, in response to an operation on a capsule notification, the electronic device may separately unfold, for display, detailed information corresponding to the capsule notification, to meet a requirement of the user for flexibly viewing the detailed information of the notification.

In some embodiments, a priority of the first notification is higher than a priority of the second notification, and in response to the first operation of the user on the indication information of the first notification, after the displaying the detailed information of the first notification on the first interface in the floating form, the electronic device moves the indication information of the second notification in the status bar to an original display location of the indication information of the first notification for display.

For example, on the interface 1701 shown in FIG. 17(a), the electronic device displays the call capsule notification 171 and the ride hailing capsule notification 172 in the tiled manner. A priority of the call notification is higher than a priority of the ride hailing notification. In response to a tapping operation of the user on the call capsule notification 171, on the interface 1702 shown in FIG. 17(b), the electronic device unfolds, for display, the call card 173 corresponding to the call capsule notification 171, and prioritizes the ride hailing capsule notification 172 to the location with the higher display priority for display.

In this way, in response to the operation of the user on the capsule, the electronic device can present more information of the live notification to the user, and can adaptively adjust display locations of different capsules, to achieve better display effect.

In some embodiments, the indication information of the first notification includes one or more segments of text information corresponding to the first notification, and the indication information of the second notification includes one or more segments of text information corresponding to the second notification.

In some examples, formats of content displayed in a notification, for example, a color, an icon, and an information amount, are preconfigured on a server side. The information amount indicates how many segments of indication information are included in the live notification.

In some embodiments, the indication information of the second notification displayed in the status bar includes the segment of text information, the second notification corresponds to the plurality of segments of text information, and in response to the first operation of the user on the indication information of the first notification, after the displaying the detailed information of the first notification on the first interface in the floating form, when the remaining display space in the status bar meets display of the plurality of segments of text information of the second notification, the electronic device displays, in the status bar, the indication information of the second notification that includes the plurality of segments of text information.

For example, on the interface 1801 shown in FIG. 18(a), the electronic device displays the call capsule notification 181 and the ride hailing capsule notification 182 in the tiled manner. In response to a tapping operation of the user on the call capsule notification 181, on the interface 1802 shown in FIG. 18(b), the electronic device unfolds, for display, the call card 183 corresponding to the call capsule notification 181, prioritizes the ride hailing capsule notification 182 displayed as the common capsule in the tiled manner to the location with the higher display priority, and displays the ride hailing capsule notification 182 in the tiled and extended capsule display manner.

In this way, in response to the operation of the user on the capsule, the electronic device can present more information of the live notification to the user, and can adaptively adjust the display manners and the display locations of the different capsules, to achieve better display effect.

S2704: In response to a second operation of the user on the indication information of the second notification, the electronic device displays detailed information of the second notification on the first interface in the floating form, and resumes display of the indication information of the first notification in the status bar.

For example, on the interface 1602 shown in FIG. 16(b), the electronic device displays the ride hailing card 163 in response to the operation of the user on the ride hailing capsule notification 162. The electronic device detects the operation of the user on the call capsule notification 161. For example, on the interface 1603 shown in FIG. 16(c), the electronic device displays the call card 164, and no longer displays the ride hailing card 163, but restores the display of the ride hailing capsule notification 162 in the status bar. Optionally, the ride hailing capsule notification 162 whose display is restored is displayed at the location with the highest priority in the status bar based on the priorities of the remaining capsule notifications.

In this way, the user may select, based on the requirement, the details of the to-be-viewed capsule notification. In addition, for the details of the capsule notification that the user has viewed or is not interested in, the electronic device may further automatically restore the display of the capsule notification, thereby simplifying the user operation.

In some embodiments, the electronic device obtains a third notification. In response to that the remaining display space in the status bar does not meet a display requirement of indication information of the third notification, the electronic device displays the indication information of the at least two notifications and a folding control in the folded form. The folding control indicates the folded third notification. The folded form includes that the indication information of the first notification, the indication information of the second notification, and the folding control are displayed independently of each other.

Optionally, the indication information in the two capsule forms is displayed in the folded form, and folding includes horizontal folding or vertical folding.

For example, on the interface 1601 shown in FIG. 16(a), in a process of displaying the call capsule notification 161 and the ride hailing capsule notification 162 in the tiled manner in the status bar, the electronic device receives a takeout notification, and determines that a takeout capsule notification needs to be displayed. In addition, the electronic device determines that the remaining display space in the status bar is not enough to display the takeout capsule notification. In this case, as shown in FIG. 21(b), the electronic device folds the call capsule notification and the ride hailing capsule notification for display, and displays the folding control 213. The folding control 213 indicates the folded takeout capsule notification.

In this way, when the display space in the status bar is not enough, the electronic device may display a plurality of capsule notifications in the folded manner, to meet a notification display requirement and facilitate viewing of the notifications by the user.

In some examples, the electronic device detects a third operation of the user on the folding control, and displays, on the first interface in the floating form, detailed information of the folded third notification; or displays, on the first interface in the floating form, the detailed information of the first notification, the detailed information of the second notification, and detailed information of the third notification.

For example, on the interface 2401 shown in FIG. 24(a), the electronic device displays the call capsule notification 241 and the ride hailing capsule notification 242 in the folded manner, and displays the folding control 243. In response to the operation of the user on the folding control 243, for example, on the interface 2402 shown in FIG. 24(b), the electronic device displays the takeout card 244 corresponding to the folded takeout capsule notification.

For another example, on the interface 2501 shown in FIG. 25(a), the electronic device displays the call capsule notification 251 and the ride hailing capsule notification 252 in the folded manner, and displays the folding control 253. In response to the operation of the user on the folding control 253, for example, on the interface 2502 shown in FIG. 25(b), the electronic device displays the cards corresponding to all the capsules, for example, the call card 254 corresponding to the call capsule notification 251, the ride hailing card 255 corresponding to the ride hailing capsule notification 252, and the takeout card 256 corresponding to the folded takeout capsule notification.

In this way, the user can indicate, based on a requirement by tapping the capsule, the electronic device to display detailed information of the folded capsule notification, thereby avoiding a problem that the user cannot obtain notification content because the capsule notification is folded.

In some embodiments, the electronic device obtains a fourth notification. A priority of the fourth notification is lower than the priority of the first notification and the priority of the second notification. The electronic device displays the indication information of the at least two notifications and a folding control in the folded form. The folding control indicates the folded third notification and the folded fourth notification.

In some examples, in response to the first operation of the user on the indication information of the first notification, after the displaying the detailed information of the first notification on the first interface in the floating form, when the remaining display space in the status bar meets the display requirement of the indication information of the folded third notification, the electronic device displays the indication information of the third notification in the status bar. A priority of the third notification is higher than the priority of the fourth notification.

In this way, based on priorities of the notifications and the remaining display space in the status bar, the electronic device performs adjustment adaptively to display the capsule notifications in the unfolded or folded manner, and adaptively adjusts a display sequence of the capsule notifications. In this way, when a live notification is timely presented to the user, a live notification with a higher priority is preferentially presented to the user.

In some embodiments, in response to the first operation of the user on the indication information of the first notification, after the displaying the detailed information of the first notification on the first interface in the floating form, when the remaining display space in the status bar meets the display requirement of the indication information of the folded third notification, the electronic device displays the indication information of the third notification in the status bar, and no longer displays the folding control in the status bar.

Optionally, in the scenario shown in FIG. 24(a) and FIG. 24(b), when there is one folded capsule notification, in response to the operation of the user on the folding control, the electronic device no longer displays the folding control after displaying a card corresponding to the folded capsule notification. For example, on the interface 2402 shown in FIG. 24(b), the folded capsule includes only the takeout capsule, and the electronic device displays the call capsule notification 241 and the ride hailing capsule notification 242 in the tiled manner, and no longer displays the folding control 243.

**In** this way, based on a display status of the capsule notification and a status of the remaining space in the status bar, the electronic device can perform adjustment adaptively about whether to display the capsule notification in the folded manner, to flexibly present the capsule notification to the user.

**In** some embodiments, the electronic device obtains a fifth notification. In response to that the remaining display space in the status bar does not meet a display requirement of indication information of the fifth notification, the electronic device displays the indication information of the at least two notifications and the indication information of the fifth notification in a stacked form. A priority of the fifth notification is lower than priorities of the at least two notifications, and the stacked form includes that the indication information of the at least two notifications partially covers the indication information of the fifth notification.

**In** some examples, the indication information in the two capsule forms is displayed in the stacked form, and stacking includes horizontal stacking or vertical stacking.

**In** this way, the electronic device may choose to use the folded form or the stacked form to flexibly display more capsule notifications.

**In** some examples, in response to an operation of the user on a display area of the indication information of the at least two notifications and the indication information of the fifth notification, the electronic device displays, on the first interface in the floating form, the detailed information of the first notification, the detailed information of the second notification, and detailed information of the fifth notification.

**In** this way, when the electronic device displays a plurality of capsule notifications in the stacked form, in response to the user operation, the electronic device may alternatively present detailed information of the capsule notifications to the user, so that the user can better learn of notification content.

In some solutions, a plurality of embodiments of this application may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution sequence is an only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

The foregoing describes, in detail with reference to FIG. 3(a) to FIG. 3(e) to FIG. 27, the notification display method provided in embodiments of this application. The following describes in detail an electronic device provided in an embodiment of this application with reference to FIG. 28.

In a possible design, FIG. 28 is a diagram of a structure of an electronic device according to an embodiment of this application. As shown in FIG. 28, an electronic device 2800 may include a display unit 2801, a processing unit 2802, and a transceiver unit 2803. The electronic device 2800 may be configured to implement a function of the electronic device in the foregoing method embodiments.

Optionally, the display unit 2801 is configured to support the electronic device 2800 to perform S503 or S505 in FIG. 5; and/or support the electronic device 2800 to perform S804, S805, S807, and S810 in FIG. 8B; and/or support the electronic device 2800 to perform S1501, S1503, S1504a, and S1504b in FIG. 15; and/or support the electronic device 2800 to perform S1903, S1904a, and S1904b in FIG. 19; and/or support the electronic device 2800 to perform S2202, S2204a, and S2204b in FIG. 22; and/or support the electronic device 2800 to perform S2701, S2702, S2703, and S2704 in FIG. 27.

Optionally, the processing unit 2802 is configured to support the electronic device 2800 to perform S502 and S504 in FIG. 5; and/or support the electronic device 2800 to perform S802, S803, S806, S808, and S809 in FIG. 8A and FIG. 8B; and/or support the electronic device 2800 to perform S1902 in FIG. 19.

Optionally, the transceiver unit 2803 is configured to support the electronic device 2800 to perform S501 in FIG. 5; and/or support the electronic device 2800 to perform S801 in FIG. 8A; and/or support the electronic device 2800 to perform S1502 in FIG. 15; and/or support the electronic device 2800 to perform S1901 in FIG. 19; and/or support the electronic device 2800 to perform S2201 and S2203 in FIG. 22.

The transceiver unit may include a receiving unit and a sending unit, may be implemented by a transceiver or a transceiver-related circuit component, and may be a transceiver or a transceiver module. Operations and/or functions of the units in the electronic device 2800 are respectively intended to implement corresponding procedures of the notification display method in the foregoing method embodiments. All related content of the steps in the foregoing method embodiments may be referenced to function descriptions of corresponding functional units. For brevity, details are not described herein again.

Optionally, the electronic device 2800 shown in FIG. 28 may further include a storage unit (not shown in FIG. 28), and the storage unit stores a program or instructions. When the display unit 2801, the processing unit 2802, and the transceiver unit 2803 execute the program or the instructions, the electronic device 2800 shown in FIG. 28 can perform the notification display method in the foregoing method embodiments.

For technical effect of the electronic device 2800 shown in FIG. 28, refer to the technical effect of the notification display method in the foregoing method embodiments. Details are not described herein again.

In addition to the form of the electronic device 2800, the technical solution provided in this application may alternatively be a functional unit or a chip in the electronic device, or an apparatus used in combination with the electronic device.

An embodiment of this application further provides a chip system, including a processor, the processor is coupled to a memory, and the memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may alternatively be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the notification display method in the foregoing embodiments.

An embodiment of this application further provides a computer program product. When the computer program product runs on a computer, the computer is enabled to perform the foregoing related steps, to implement the notification display method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the notification display method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium that is well known in the art. For example, a storage medium is coupled to the processor, so that the processor can read information from the storage medium or write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is merely used as an example for description. During actual application, the foregoing functions can be allocated to different functional modules for implementation based on a requirement. That is, an internal structure of the apparatus is divided into different functional modules to implement all or some of the functions described above. For detailed working processes of the foregoing system, apparatus, and unit, refer to corresponding processes in the foregoing method embodiments. Details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A notification display method, applied to an electronic device, wherein the method comprises:
displaying a first interface, wherein the first interface comprises a status bar on a top;
displaying indication information of at least two notifications in the status bar, wherein the indication information of the at least two notifications comprises indication information of a first notification and indication information of a second notification, and the indication information of the first notification and the indication information of the second notification are displayed independently of each other;
in response to a first operation of a user on the indication information of the first notification, displaying detailed information of the first notification on the first interface in a floating form; and
in response to a second operation of the user on the indication information of the second notification, displaying detailed information of the second notification on the first interface in the floating form, and resuming display of the indication information of the first notification in the status bar.

2. The method according to claim 1, wherein the method further comprises:
obtaining a third notification; and
in response to remaining display space in the status bar not meeting a display requirement of indication information of the third notification,
displaying the indication information of the at least two notifications and a folding control in a folded form, wherein the folding control indicates the folded third notification, and the folded form comprises that the indication information of the first notification, the indication information of the second notification, and the folding control are displayed independently of each other.

3. The method according to claim 2, wherein the method further comprises:
detecting a third operation of the user on the folding control; and
displaying, on the first interface in the floating form, detailed information of the folded third notification; or
displaying, on the first interface in the floating form, the detailed information of the first notification, the detailed information of the second notification, and detailed information of the third notification.

4. The method according to claim 2 or 3, wherein the method further comprises:
obtaining a fourth notification, wherein a priority of the fourth notification is lower than a priority of the first notification and a priority of the second notification; and
displaying the indication information of the at least two notifications and a folding control in the folded form, wherein the folding control indicates the folded third notification and the folded fourth notification.

5. The method according to claim 4, wherein in response to the first operation of the user on the indication information of the first notification, after the displaying the detailed information of the first notification on the first interface in the floating form, the method further comprises:
when the remaining display space in the status bar meets the display requirement of the indication information of the folded third notification, displaying the indication information of the third notification in the status bar, wherein a priority of the third notification is higher than the priority of the fourth notification.

6. The method according to claim 2 or 3, wherein in response to the first operation of the user on the indication information of the first notification, after the displaying the detailed information of the first notification on the first interface in the floating form, the method further comprises:
when the remaining display space in the status bar meets the display requirement of the indication information of the folded third notification, displaying the indication information of the third notification in the status bar, and no longer displaying the folding control in the status bar.

7. The method according to any one of claims 1 to 6, wherein the priority of the first notification is higher than the priority of the second notification, and in response to the first operation of the user on the indication information of the first notification, after the displaying the detailed information of the first notification on the first interface in the floating form, the method further comprises:
moving the indication information of the second notification in the status bar to an original display location of the indication information of the first notification for display.

8. The method according to any one of claims 1 to 7, wherein the indication information of the second notification displayed in the status bar comprises one segment of text information, the second notification corresponds to a plurality of segments of text information, and in response to the first operation of the user on the indication information of the first notification, after the displaying the detailed information of the first notification on the first interface in the floating form, the method further comprises:
when the remaining display space in the status bar meets display of the plurality of segments of text information of the second notification, displaying, in the status bar, the indication information of the second notification that comprises the plurality of segments of text information.

9. The method according to any one of claims 1 to 8, wherein the indication information of the first notification comprises one or more segments of text information corresponding to the first notification, and the indication information of the second notification comprises one or more segments of text information corresponding to the second notification.

10. The method according to claim 1, wherein the method further comprises:
obtaining a fifth notification; and
in response to remaining display space in the status bar not meeting a display requirement of indication information of the fifth notification,
displaying the indication information of the at least two notifications and the indication information of the fifth notification in a stacked form, wherein a priority of the fifth notification is lower than priorities of the at least two notifications, and the stacked form comprises that the indication information of the at least two notifications partially covers the indication information of the fifth notification.

11. The method according to claim 10, wherein the method further comprises:
in response to an operation of the user on a display area of the indication information of the at least two notifications and the indication information of the fifth notification, displaying, on the first interface in the floating form, the detailed information of the first notification, the detailed information of the second notification, and detailed information of the fifth notification.

12. The method according to any one of claims 1 to 11, wherein both the indication information of the first notification and the indication information of the second notification are in capsule forms.

13. The method according to any one of claims 1 to 12, wherein the detailed information is carried in a card form.

14. The method according to any one of claims 1 to 13, wherein the indication information indicates an application that sends the first notification or the second notification, and also indicates content of the first notification or content of the second notification.

15. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 14.

16. A computer-readable storage medium, wherein the computer-readable storage medium comprises a computer program, and when the computer program is run on an electronic device, the electronic device is enabled to perform the method according to any one of claims 1 to 14.

17. A computer program product, wherein when the computer program product runs on a computer, the computer is enabled to perform the method according to any one of claims 1 to 14.
